# EUROPEAN PATENT SPECIFICATION

(11) **EP 1 325 924 B1**
(45) Date of publication and mention of the grant of the patent: **16.03.2005**
(21) Application number: 02380001.4
(22) Date of filing: 03.01.2002
(51) Int. Cl.: C07F 11/00, C08F 10/06, C08F 4/69

(54) **Chromium catalysts active in olefin polymerisation**
Chromkatalysatoren aktiv in der Olefinpolymerisation
Catalyseur de chrome pour la polymérisation d'oléfines

(43) Date of publication of application: 09.07.2003
(73) Proprietor: REPSOL QUIMICA S.A., E-28046 Madrid (ES)
(72) Inventor: Mendez Llatas, Luis, 28935 Mostoles (ES); Sanz Gil, Encarna, 28430 Alpedrete (Madrid) (ES); Sancho Royo, José, 28003 Madrid (ES); Esteruelas Rodrigo, Miguel Angel, 50009 Zaragoza (ES); Lopez De Lama, Ana Margarita, 50009 Zaragoza (ES); Olivan Esco, Montserrat, 22004 Huesca (ES); Onate Rodriguez, Enrique, 26005 Logrono (ES)
(74) Representative: Del Santo Abril, Natividad

(56) References cited:
- WO-A-00/69923
- WO-A-99/57159

## Description

The present invention relates to chromium (III) tridentate complexes, to olefin polymerization catalysts comprising said chromium (III) tridentate complexes, and to a process for (co)polymerization of alpha-olefins.

The industrial production of polyolefins mediated by transition metal catalysts has been expanding since the discoveries of the so-called Ziegler-Natta and Phillips catalysts. These types of catalytic systems are of heterogeneous nature, meaning this that, within a catalytic system, the polymerisation activity is located in sites (known in the art as active centers) that are of non-identical nature. The active centers for the Ziegler-Natta catalysts are usually based on titanium atoms while the Phillips catalysts employ chromium. The heterogeneous nature of the catalysts is thought in the art to be responsible for certain heterogeneities in the polymers produced (e.g. wide molecular weight and co-monomer distributions) which might be not desirable for certain applications. The discovery by Kaminsky and Sinn that metallocene complexes of titanium and zirconium polymerise olefins when activated with certain agents (usually known as co-catalysts) rendered polymerisation catalytic systems of homogeneous nature. Because the active centers of the Kaminsky-Sinn catalysts are elements of the Group 4 of the Periodic Table of the Elements (titanium, zirconium, hafnium), they are often conceptually considered in the art as homogeneous versions of the Ziegler-Natta catalytic systems. The homogeneous nature of these systems has allowed the production of polymers with narrower molecular weight and co-monomer distributions, and also a better understanding of the factors which control the stereo regularity (tacticity), which allow a better control of the properties of the final polymer. Because the properties of the polymers so produced can be better controlled, they are known in the art as tailor-made polyolefins and since all active centers in the catalysts are identical, these catalysts are usually known as Single Site Catalysts.

Since the discovery of Kaminsky and Sinn many other homogeneous catalytic systems have appeared based on Ziegler-Natta type elements (titanium, zirconium) but also with late transition metals (iron, cobalt, nickel, palladium). Most of these systems consist of transition metal complexes, i.e.: a transition metal bound to one or more organic molecules (usually known in the art as ligands). In most cases, the transition metal complex must be activated with a co-catalyst in order to be catalytically active.

In the last 3 years, several patent applications have been filed wherein olefins are polymerised by using late transition metals complexed with tridentate ligands.

WO 98/27124 (Du Pont) and WO 99/12981 (BP) disclose tridentate imino ligands complexing iron or cobalt through formation of three coordination bonds.

WO 98/30612 discloses the use of similar complexes in the polymerisation of propylene.

In spite of the success of heterogeneous Phillips catalysts, single site catalysts based on Group 6 or, more specifically, chromium are less common.

Patent Applications WO 00/20427 (example 11) and WO 00/69923 (examples 1, 5, 6, 10 and 13) provide examples of chromium complexes in which the metal is in divalent oxidation state, Cr[II], and is coordinatively bound to one characteristic tridentate neutral ligand by donation of lone pair of electrons from three nitrogen atoms in the ligands to the metal, and to two halogen or alkyl atoms through ionic or covalent bonding. Some of these complexes have been shown to be active in the polymerisation of ethylene (WO 00/20427 example 16.7, reporting an activity of 8 kg PE/mol Cr·bar·h) and propylene (WO 00/69923, polymerisation run n° 1 with an activity of 1,4E+04 kg PP/mol Cr·mol propylene·h) when activated with methylaluminoxane (co-catalyst) under certain polymerisation conditions. However, the referred state of the art does not provide evidence of tridentate chromium homogeneous catalytic systems sufficiently active in the polymerisation of ethylene for industrially practical purposes. Catalytic systems providing activities of 100 kg PE/mol Cr·bar·h or greater at polymerisation temperatures of 50 °C or over under ethylene polymerisation pressures of 1 bar or more are desired for industrially practical purposes.

Patent Application WO 99/57159 discloses group 4-9 first or second row transition metal complexes in a reduced oxidation state which include Cr(III) complexes (examples 3, 8 and 10), having monoanionic (thus not neutral) tridentate ancillary ligands. Complexes activated with methylaluminoxane for the polymerization of ethylene can reach activities around 100 Kg PE/(molCr·bar·h) at temperatures over 50 °C (examples 23 and 24)

We have found that the employment of tridentate chromium complexes and, more specifically, tridentate chromium complexes being the metal in a trivalent oxidation state, Cr[III], can render exceptionally high-active catalysts for the polymerisation of ethylene when activated with certain co-activators. More specifically, we have found that complexes of chromium [III] with tridentate ligands having at least one imino group when activated with alkylaluminiums and/or alkylaluminoxanes can reach activities over 100 kg PE/(mol Cr·bar·h) at polymerisation temperatures of 50°C or over and at 1 bar of ethylene pressure or over.

The object of the present invention are chromium [III] tridentate complexes of formula I.

Some compounds of formula (I) upon activation provide catalytic systems with activities over 100 kg PE/(mol Cr·bar·h) at polymerisation temperatures of 50°C or over and at 1 bar of ethylene pressure or over. Thus, the invention refers to chromium [III] tridentate complexes of formula I 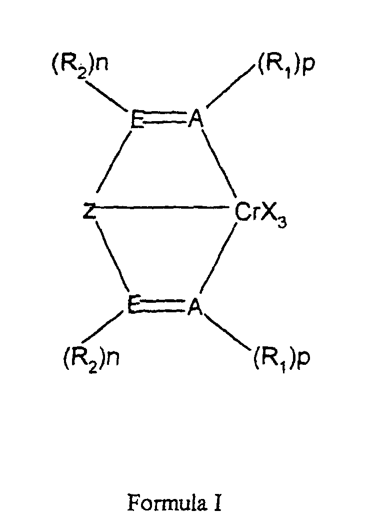 wherein:
Z is a group comprising at least a nitrogen, phosphorous, oxygen or sulfur atom which is able to coordinate to the chromium atom;
each R₁ is independently selected from the group consisting of H and a monovalent radical comprising from 1 to 30 carbon atoms and from 0 to 5 heteroatoms independently selected from Si, N, P, O, F, Cl and B atoms; preferably it is selected from hydrogen, linear or branched C₁-C₂₀ alkyl, C₃-C₂₀ cycloalkyl, C₆-C₃₀ aryl, linear or branched C₂-C₂₀ alkenyl, optionally comprising 1 to 5 heteroatoms independently selected from Si, N, P, O, F, Cl and B atoms; more preferably it is an optionally substituted phenyl, 2-naphthyl, diphenylmethyl, N-pirrolyl or 5-anthracyl;
each R₂ is independently selected from the group consisting of H and a monovalent radical comprising from 1 to 30 carbon atoms and from 0 to 5 heteroatoms independently selected from Si, N, P, O, F, Cl and B atoms; preferably it is selected from hydrogen, linear or branched C₁-C₂₀ alkyl, C₃-C₂₀ cycloalkyl, silyl, C₆-C₃₀ aryl, linear or branched C₂-C₂₀ alkenyl, optionally comprising 1 to 5 heteroatoms independently selected from Si, N, P, O, F, Cl and B atoms; more preferably it is selected from the group consisting of H, methyl and phenyl;
each R₂ can join together with either R₁ or Z forming one or more aromatic or aliphatic rings optionally containing heteroatoms; preferably, each aromatic or aliphatic ring optionally contain from 0 to 5 heteroatoms independently selected from Si, N, P, O and B atoms;
each A is independently selected from nitrogen, phosphorous, As and Sb;
each E is independently selected from carbon, phosphorus and nitrogen;
each p is independently 1 or 2;
each n is independently 0, 1 or 2; and
each X is independently an atom or group covalently or ionically attached to the chromium atom.

In a preferred embodiment
Z is selected from the group consisting of 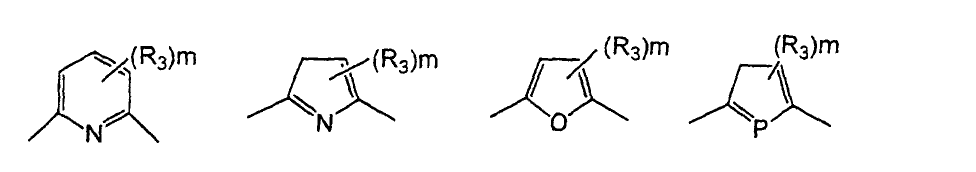 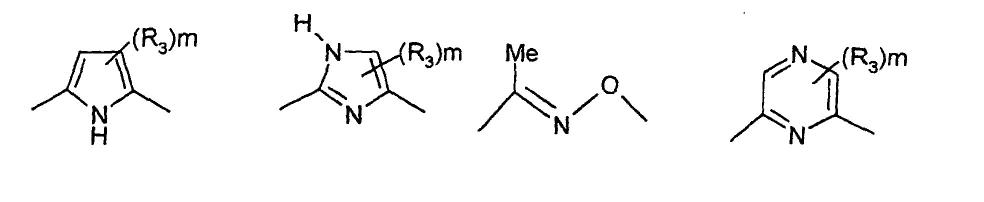 wherein each R₃ is independently selected from linear or branched C₁-C₂₀ alkyl, C₆-C₃₀ aryl, hydroxyl, amino, nitro, tri(linear or branched C₁-C₂₀ alkyl)silyl, linear or branched C₁-C₂₀ alkoxy, chlorine, bromine, fluorine and trifluoromethyl;
m is 0, 1, 2 or 3;
A is nitrogen; and
E is carbon

These complexes are used as olefin polymerisation catalyst component resulting in highly to very highly active catalytic systems when properly activated with co-catalysts (e.g. aluminoxanes) in the homopolymerisation and co-polymerisation of alpha-olefins. In a particular embodiment, the invention refers to a process for the (co)polymerisation of ethylene optionally in combination with a C₃-C₈ alpha-olefin.

A further advantage resulting from the use of trivalent chromium complexes instead of Cr[II] is that, as it is well known in the art, Cr[II] complexes are sensitive towards oxidation in atmospheres which contain oxygen such as air. For instance in 'Comprehensive Coordination Chemistry. The Synthesis, Reactions, Properties and Applications of Coordination Compounds. G. Wilkinson, R. D. Gillard and J.A. McCleverty, Eds. Vol 3: Main Group and Early Transition Elements, 1987' is stated that 'Chromium[II] complexes, especially in solution, are very rapidly oxidized by air'.

Thus, the invention provides catalyst precursors that are more easily handled when compared to the prior art.

The polymerisation of ethylene with the complexes here described can be accomplished employing activators (also known as co-catalysts) or mixtures of them. Being organoaluminium compounds and hydrocarbylboron compounds the preferred activators.

Examples of organoaluminium compounds are trialkylaluminium compounds such as trimethylaluminium, triethylaluminium, tri-n-butylaluminium, triisobutylaluminium and also aluminoxanes such as methylaluminoxane, ethylaluminoxane, tetraisobutylaluminoxane, isobutylaluminoxane, etc. The actual structure of methylaluminoxane, which is usually obtained from reaction of trimethylaluminium and controlled amounts of water, is not yet fully known.

It has been proposed to be actually a mixture of linear, cyclic and cage type structures. The hydrocarbylboron activators preferred are usually chosen regarding to the non-coordinating abilities of the anions formed after reaction with the chromium complex. Examples of such activators are tris(pentafluorophenyl)boron, trityltetra(pentafluorophenyl)borate, dimethylphenylammonium tetra(pentafluorophenyl)borate, and others known to those skilled in the art. As it was mentioned before, the activators can be employed as such or forming a mixture with other activators with similar or different nature. Thus combinations of alkylaluminiums with alkylaluminoxanes, or combinations of alkylaluminiums with hydrocarbylboron compounds, or combinations of alkylaluminoxanes and hydrocarbyl boron compounds or any other combination can be employed.

The Cr complexes of the present invention can be used as homogeneous catalyst or supported on an inorganic or organic carrier. As a carrier, any carrier known in the art can be used, preferably silica, alumina, silica-alumina and organic polymers such as polyethylene, polypropylene and crosslinked polystyrene.

In a preferred but not limiting example, the supported catalyst is obtained by mixing the Cr complex, the support and aluminoxane in any order.

The supported catalyst can be used as such or can be prepolymerised by mixing the supported catalyst, a cocatalyst, preferably aluminoxane, and ethylene in the presence of a diluent such as toluene.

The molecular weight of the polyethylene obtained by the Cr complexes of the present invention can vary from low molecular weight polyethylene (Mw of about 1000) to high molecular weight polyethylene (higher than 100.000) depending on the structure of the ligands used and from the other parameters of the catalyst system (amount and type of cocatalyst, presence and type of support, etc.).

The polymerisation catalysts here described can be employed on their own or they can be employed together with other polymerisation catalysts in order to obtain polyethylenes with special properties. Other polymerisation catalysts can be of heterogeneous or homogeneous nature. For example the chromium catalysts of the present invention can be employed with heterogeneous catalysts such as those known in the art as Ziegler-Natta catalysts or Phillips catalysts, or with homogeneous catalysts such as metallocenes as those described, for example, in patents EP 129,368, US 5,324,800, EP 416,815, nickel or palladium diimino catalysts as those described, for example, in WO 96/23010, iron or cobalt pyridine bisimino as those described, for example, in WO 98/27124, WO 98/30612, WO 99/12981, WO 00/15646, WO 00/47592 or WO 01/14391, or salicylaldiminato zirconium or titanium catalyst as described in, for example, EP 1,013,674. The homogeneous catalysts employed can also be supported on inorganic or organic solids.

Preferred but not limiting examples of ligands of formula II which can be used in the complexes with Cr[III] are herebelow listed

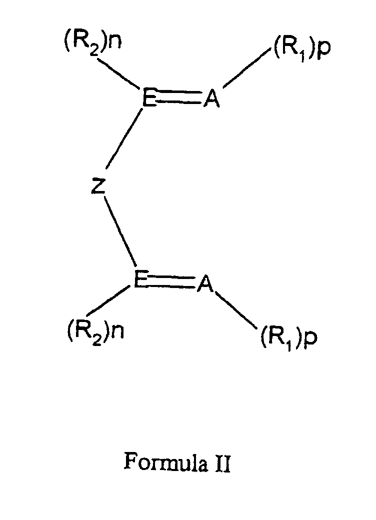

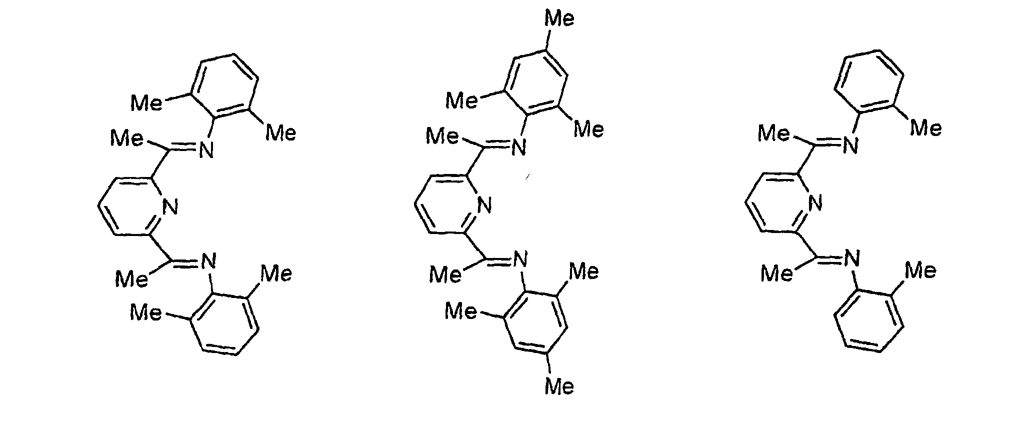

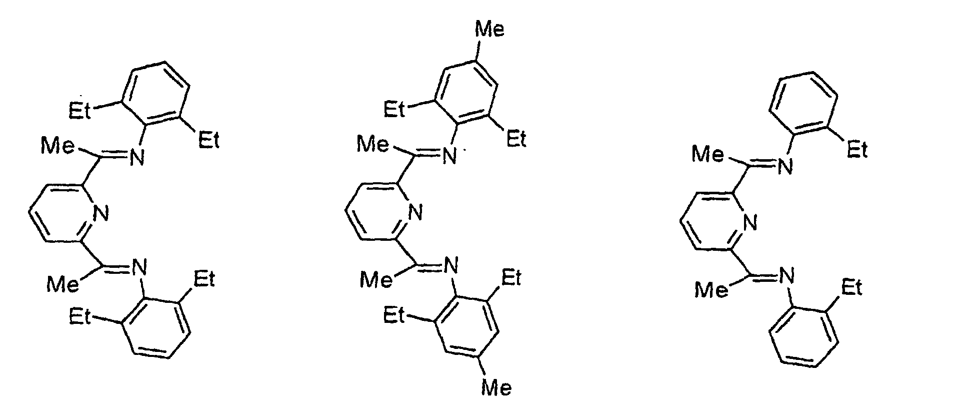

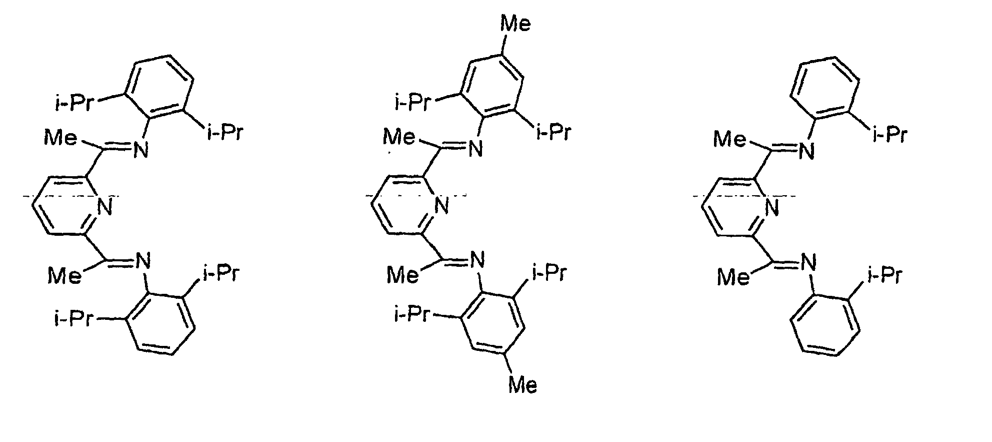

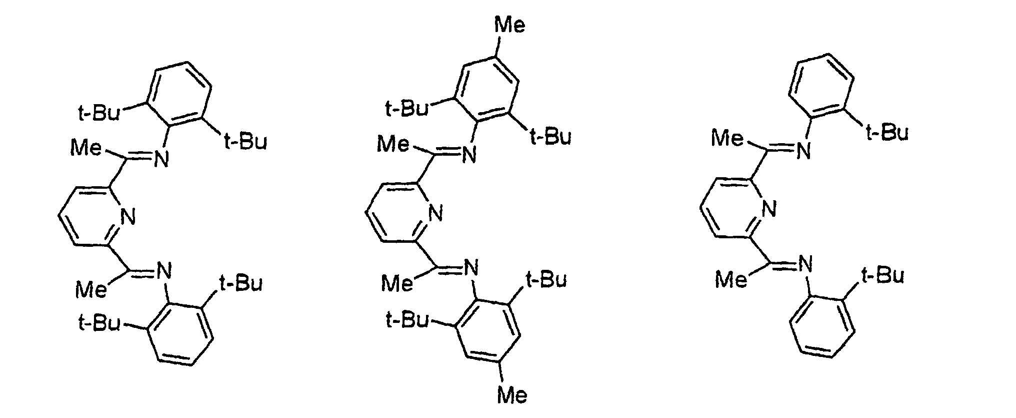

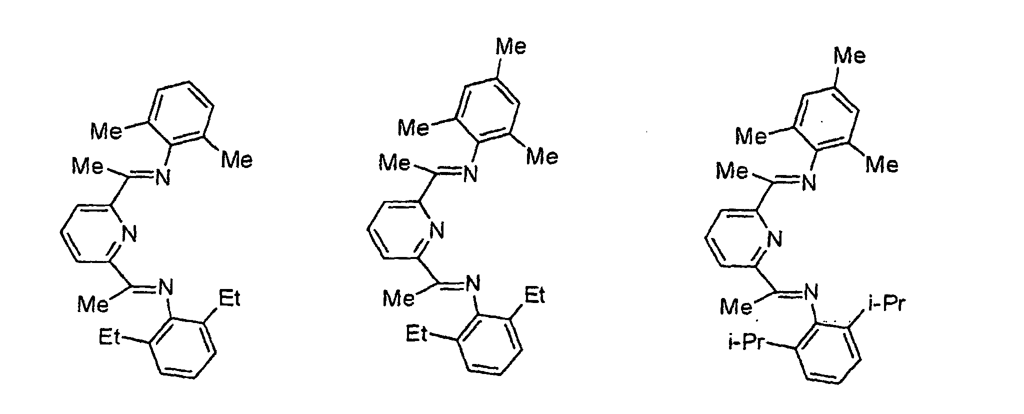

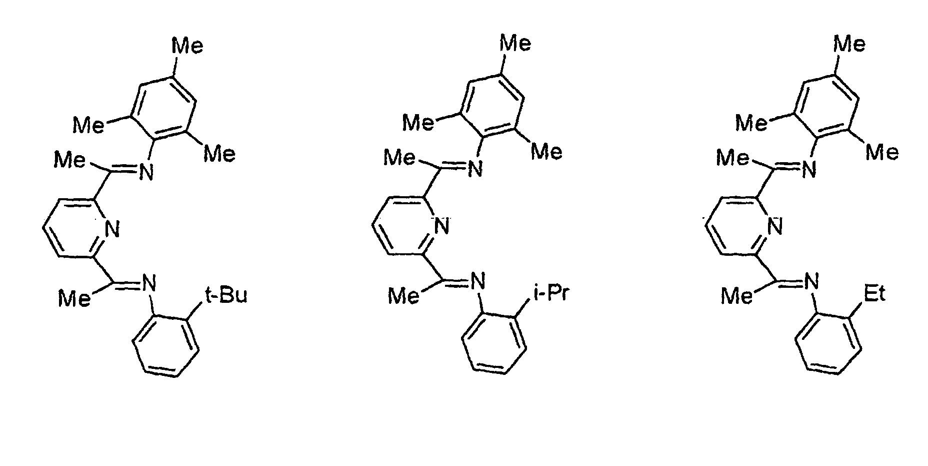

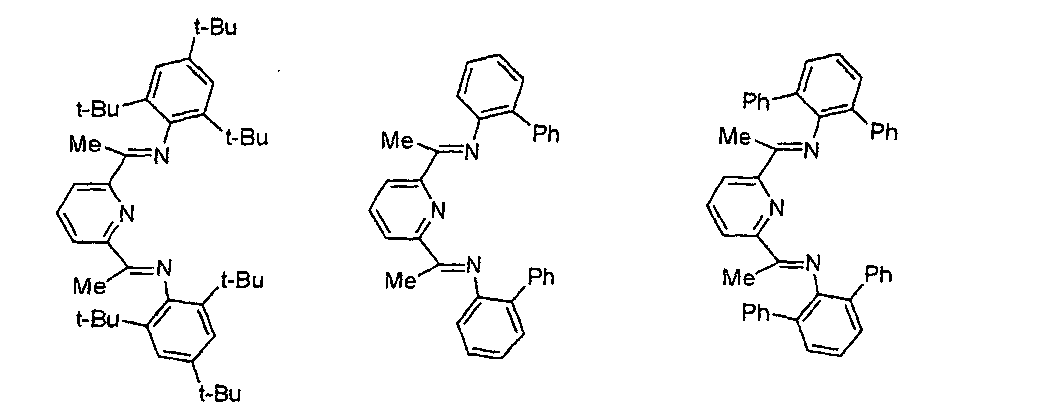

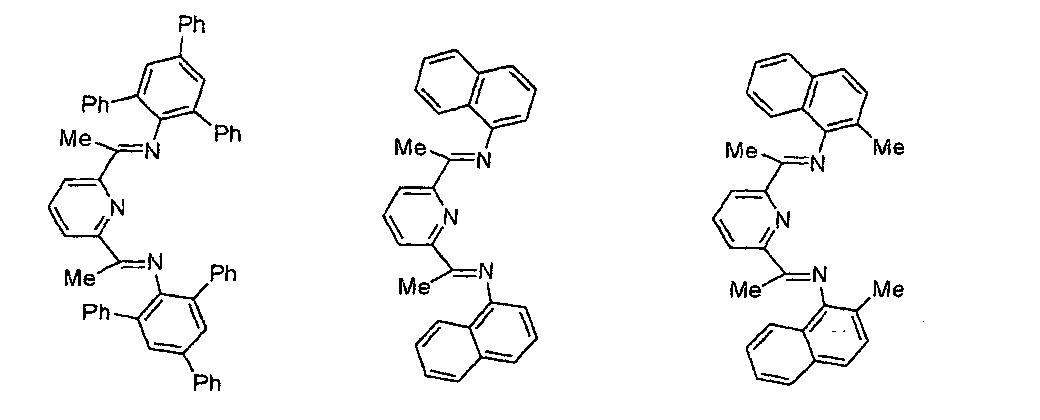

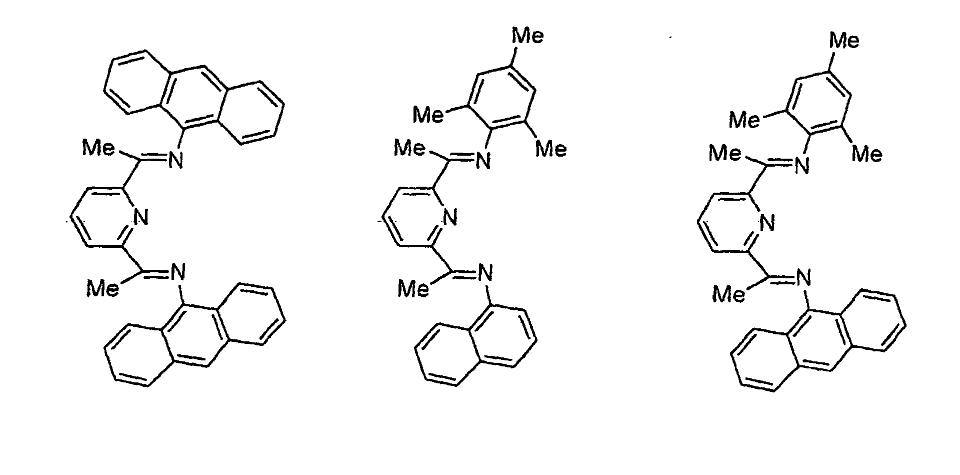

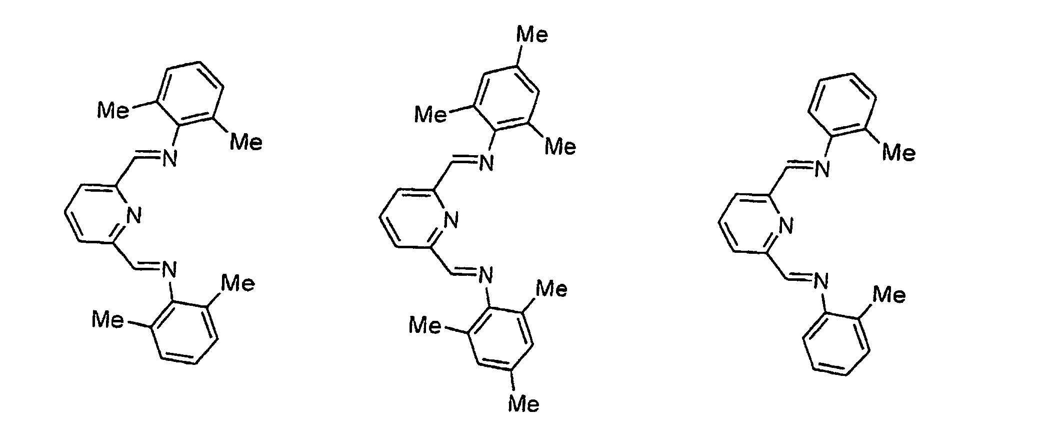

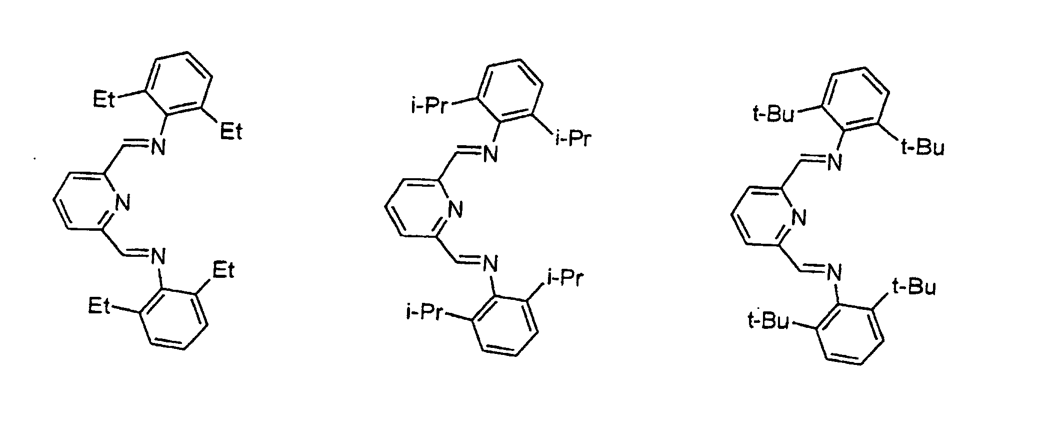

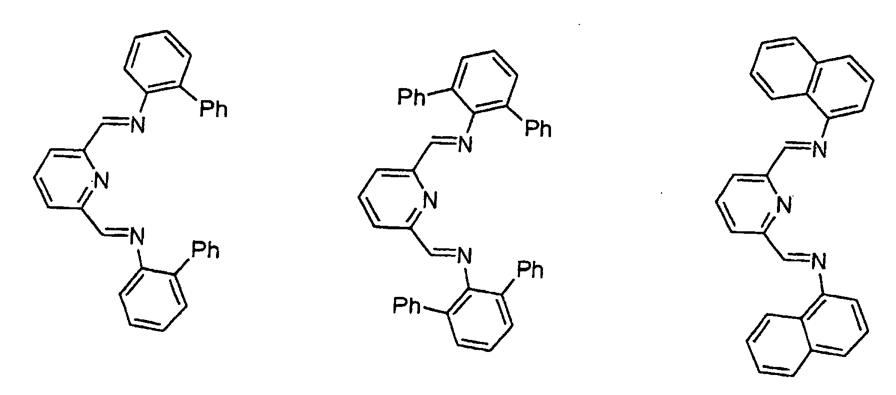

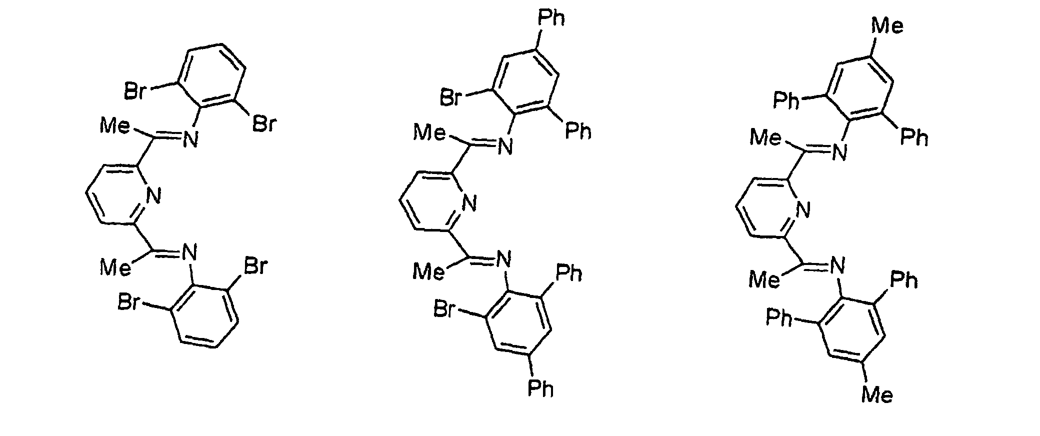

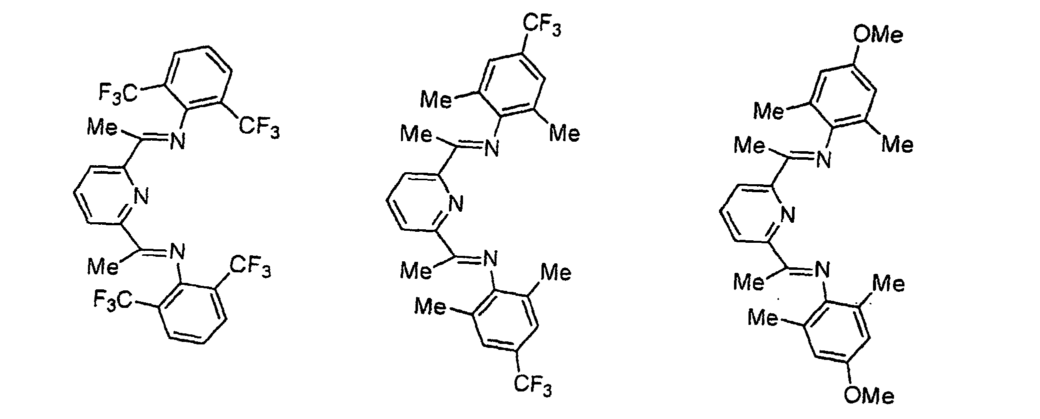

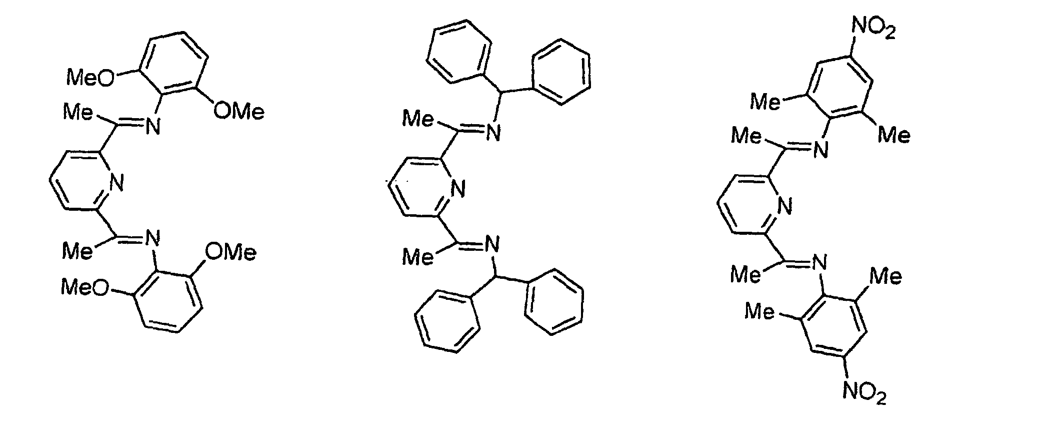

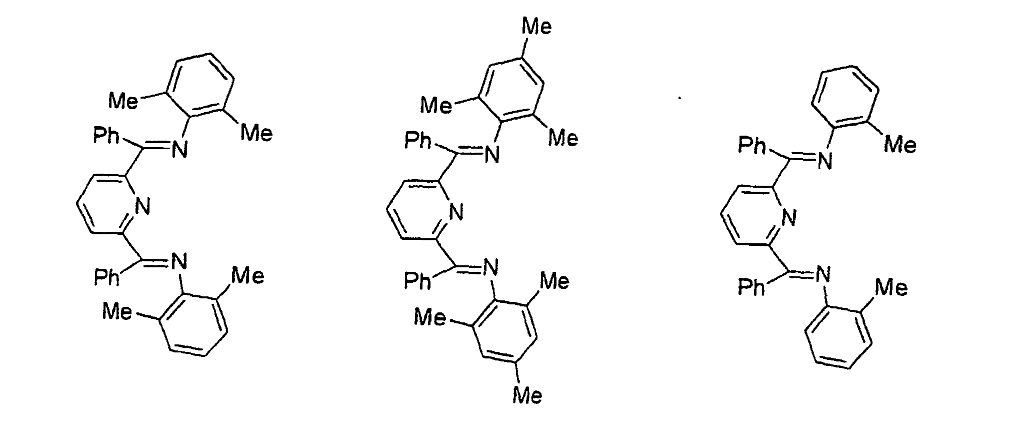

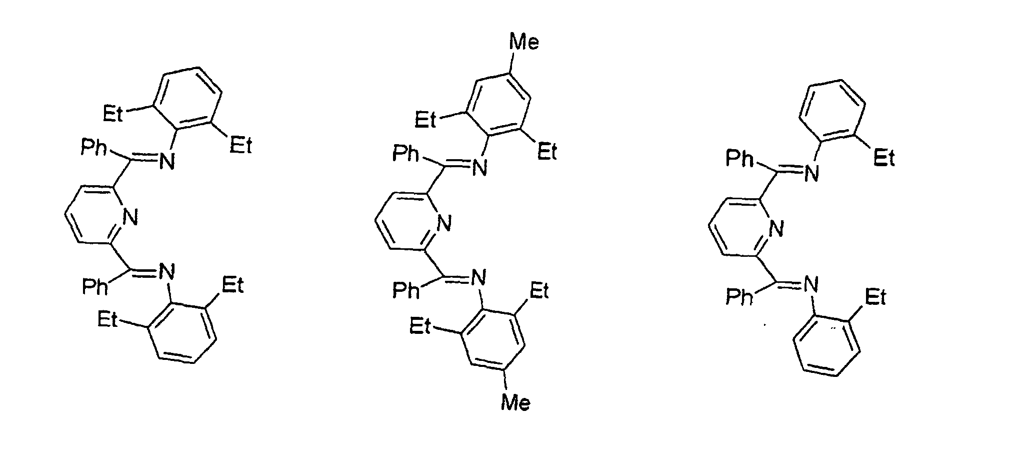

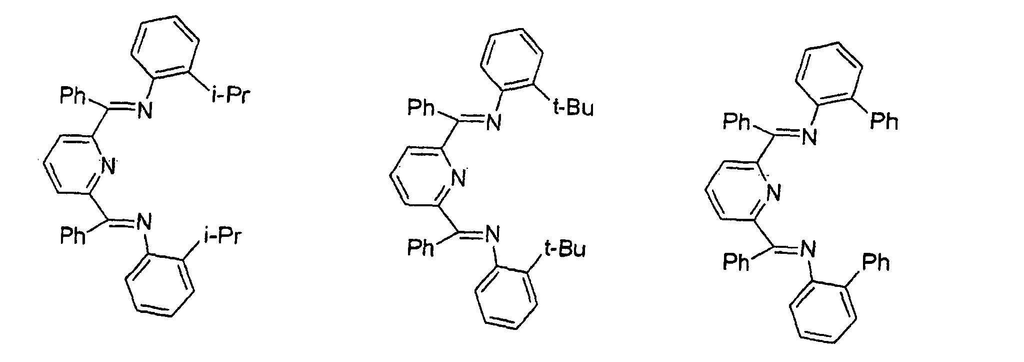

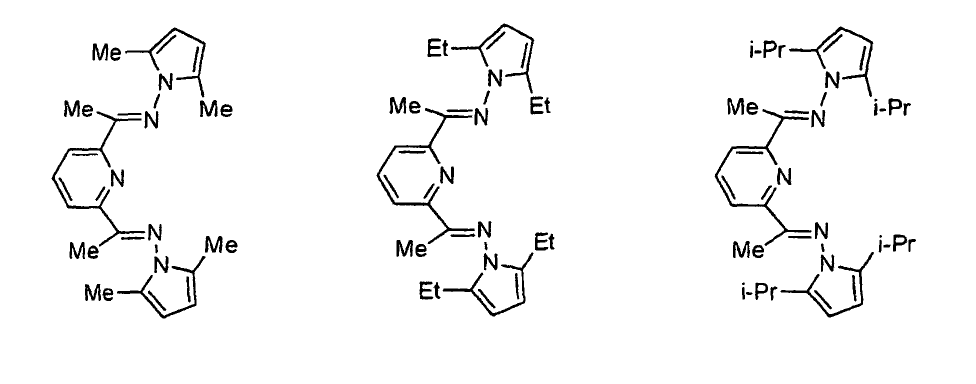

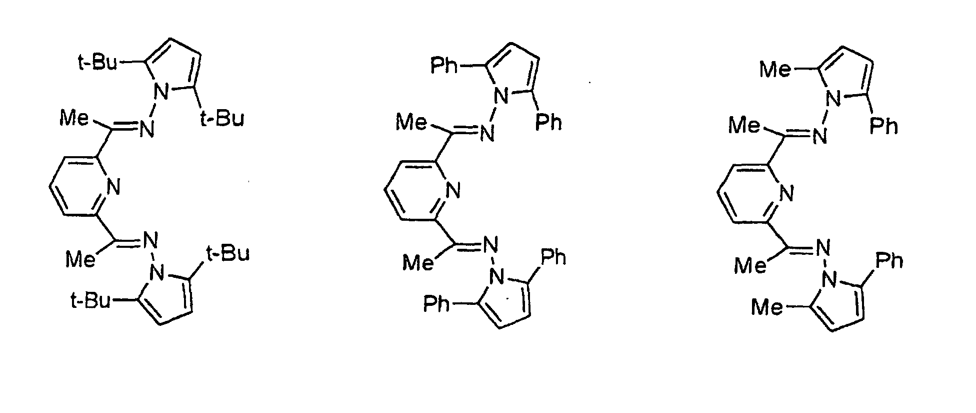

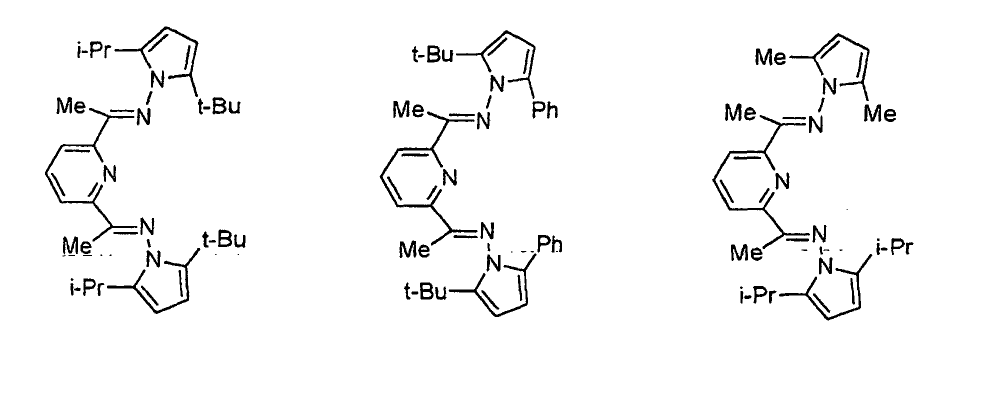

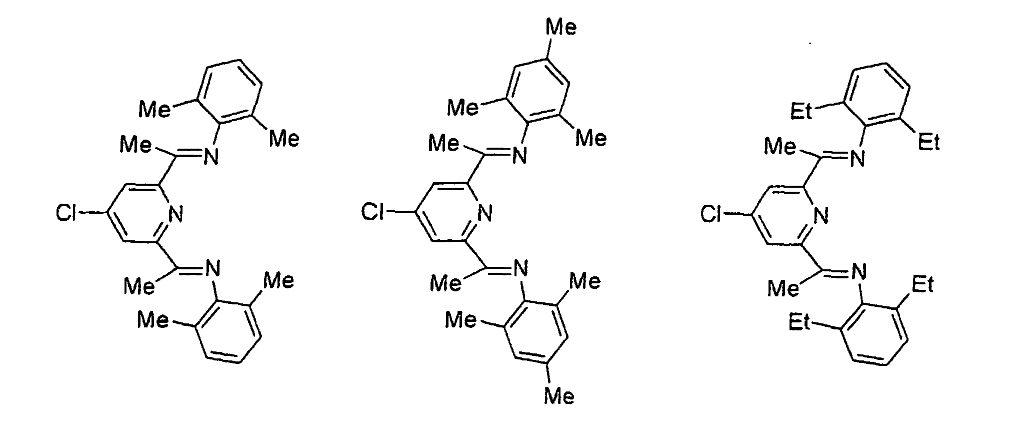

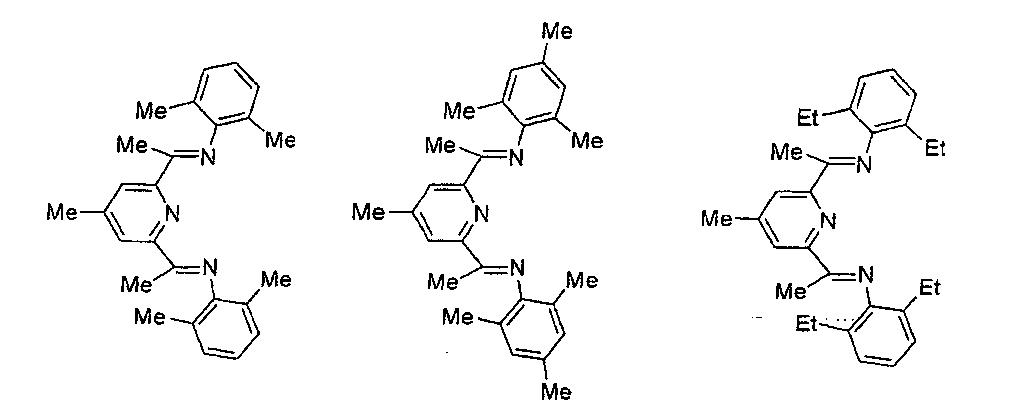

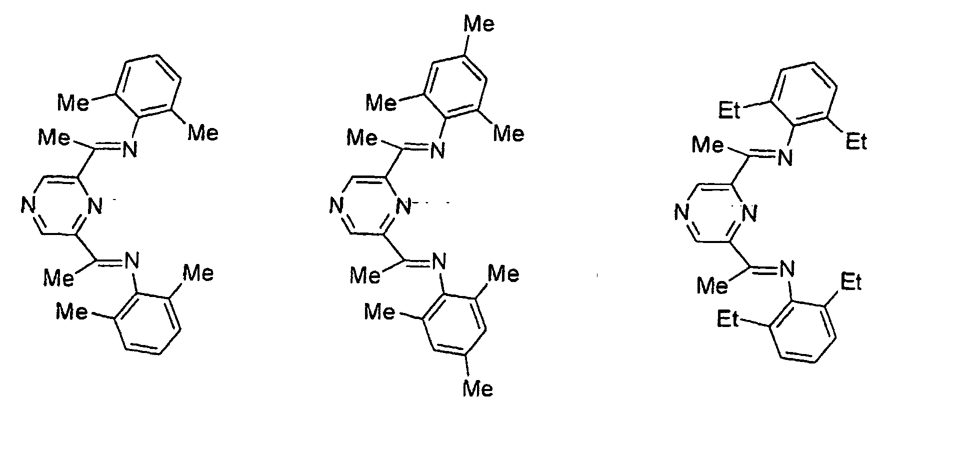

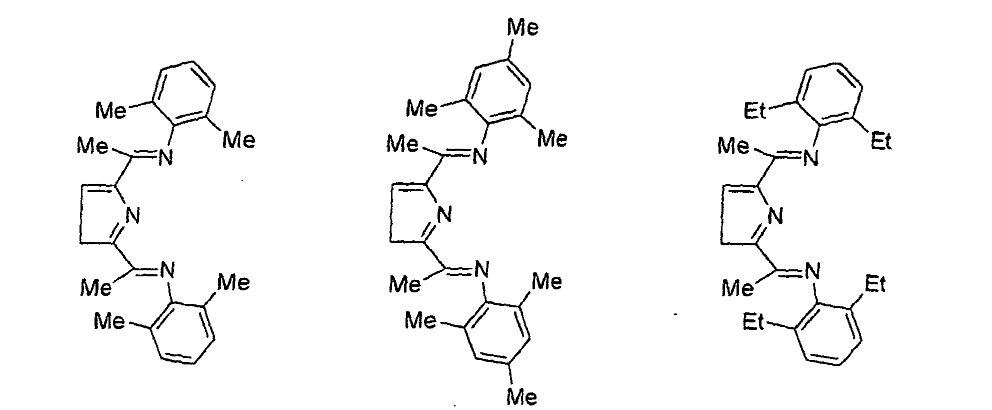

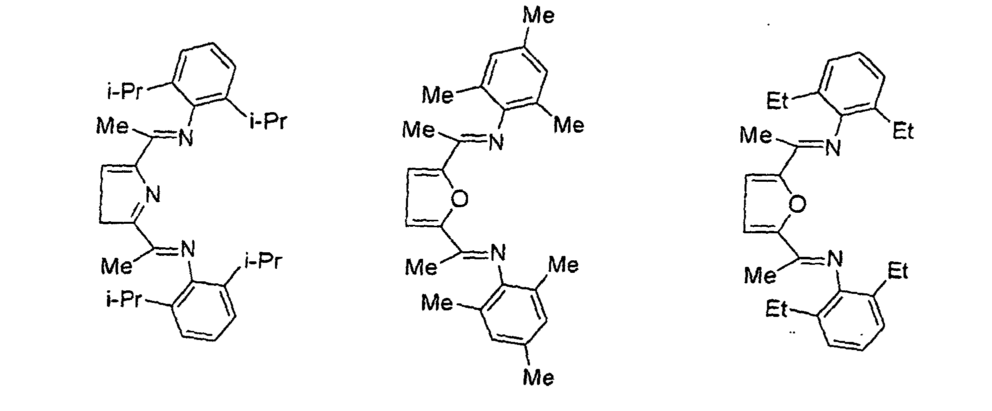

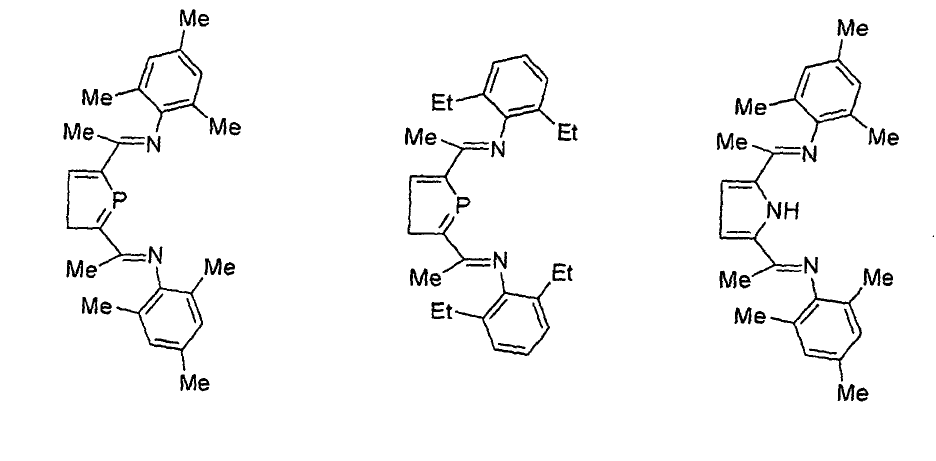

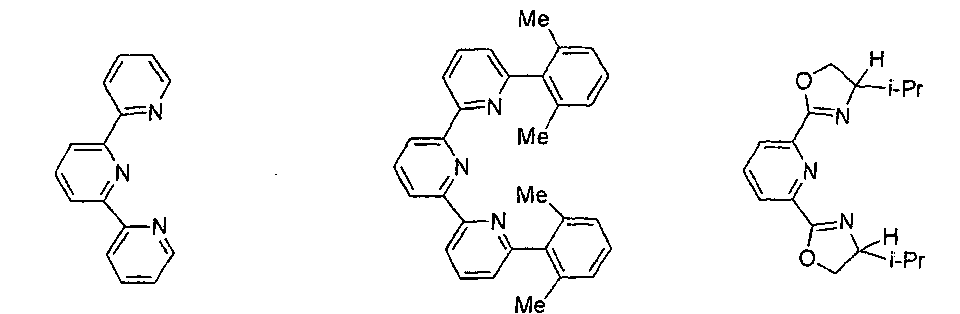

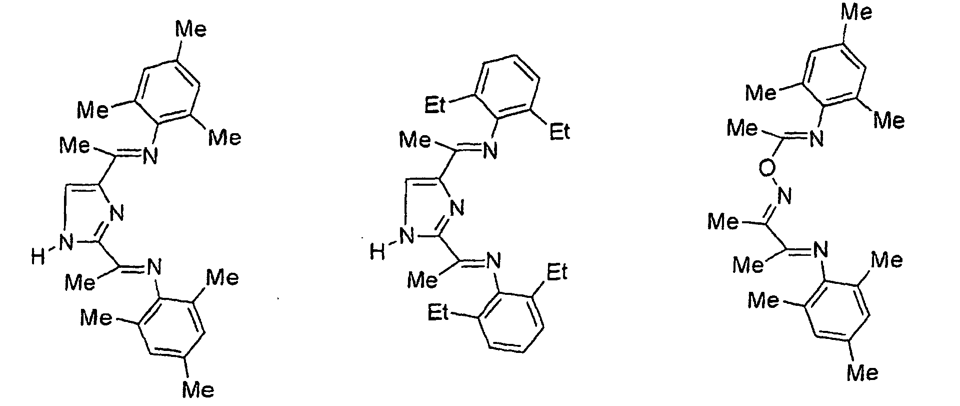

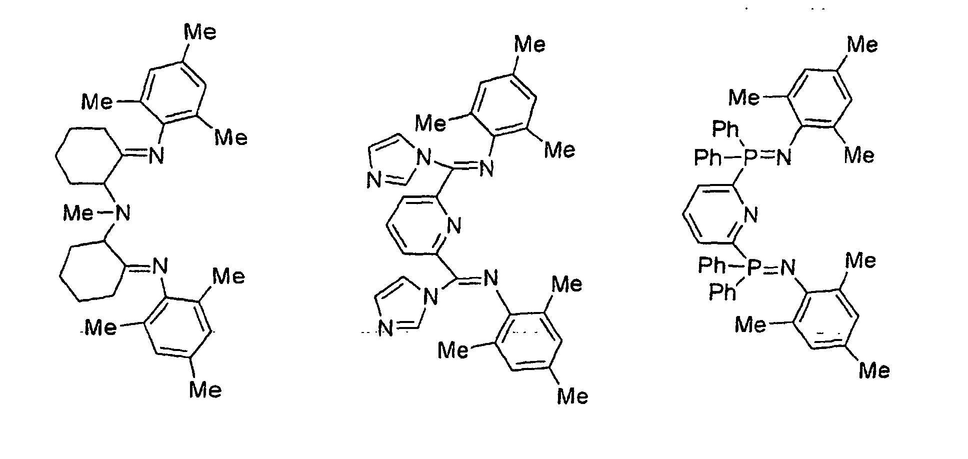

The catalysts according to the invention are suitable for use in any polymerisation process including a solution, gas, high pressure or slurry process.

### Examples of preparation of Chromium complexes

**General Procedures.** All manipulations were carried out under an atmosphere of argon, using standard Schlenk techniques. Solvents were refluxed over an appropriate drying agent and distilled prior to use. C, H, and N analyses were measured on a C. E. Instruments EA1108 analyzer. Infrared spectra were recorded on a Perkin-Elmer 883 spectrometer as solids (Nujol mull). ¹H, ¹³{¹H}C and ¹⁹F spectra were recorded on a Varian Gemini 2000.

Chemical shifts are referenced to residual solvent peaks (¹H, ¹³C{¹H}) or external CFCl₃. Mass spectra analyses were performed with a VG Auto Spec instrument. The ions were produced, FAB⁺ mode, with the standard Cs⁺ gun at ca. 30 kV, and 3-nitrobenzyl alcohol (NBA) was used as the matrix. Electron impact MS (operating at 70 eV) was used for the ligands. Cyclic voltammetric experiments were performed by employing an EG&G PARC Model 273 potentiostat. A three-electrode system was used, consisting of a platinum-wire working electrode, a platinum-wire auxiliary electrode, and a saturated calomel reference electrode. The measurements were carried out in CH₂Cl₂ solutions with 0.1 M Bu₄NPF₆ as supporting electrolite at room temperature at a sweep rate of 0.1 Vs⁻¹. All voltametric measurements were made under a dry argon atmosphere. 2,6-bis[(4*S*)-isopropyl-2-oxazolin-2-yl]pyridine was purchased from Aldrich and used as received. 2,6-bis{1-[2,6-(diethylphenyl)imino]ethyl}pyridine, 2,6-bits {1[(2-methyl-6-isopropylphenyl)imino] ethyl}pyridine, 2,6-bis {1-[(2-trifluoromethylphenyl) imino]ethyl}pyridine and 2,6-bis{1-(cyclohexylimino)ethyl}pyridine were prepared as described bellow. All the other ligands were prepared according to published methods (G. J. P. Britovsek, M. Bruce, V. C. Gibson, B. S. Kimberley, P. J. Maddox, S. Mastroianni, S. J. McTavish, C. Redshaw, G. A. Solan, S. Strömberg, A. J. P. White, D. J. Williams, *J. Am. Chem. Soc.* **1999,** *121*, 8728). CrCl₃(THF)₃ was prepared as previously reported (P. Boudjouk, J.-H. So, *Inorg. Synth.* **1992,** *29*, 108).

### Complex 1. [2,6-bis[(4S)-isopropyl-2-oxazolin-2-yl]pyridine]CrCl₃.

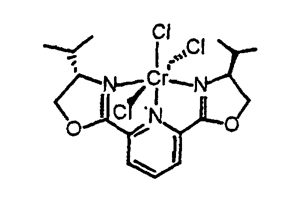

A solution of CrCl₃(THF)₃ (248 mg, 0.66 mmol) in acetone (10 mL) was treated with the stoichiometric amount of 2,6-bis[(4*S*)-isopropyl-2-oxazolin-2-yl]pyridine (200 mg, 0.66 mmol) and it was heated at 56 °C overnight. The resulting green solution was evaporated to ca. 0.5 mL and diethyl ether was added to afford a green solid that was washed repeatedly with diethyl ether (4 x 10 mL) and dried in vacuo. Yield: 249 mg (82 %). Anal. Calcd. for C₁₇H₂₃Cl₃CrN₃O₂: C, 44.41; H, 5.09; N, 9.14. Found: C, 44.74 H, 5.23; N, 8.85. IR (Nujol, cm⁻¹): 1647, 1622, 1580, 1493, 1409, 1284, 1259, 1210, 1080, 1049, 1033, 961, 922, 830, 755, 398, 364, 355, 314. MS (FAB⁺): *m*/*z* 423 (M⁺ - Cl), 388 (M⁺ - 2 Cl).

The structure of Complex 1 could be further elucidated by X-ray crystallography. C₁₇H₂₃Cl₃CrN₃O₂ CH₂Cl₂ (Mw=544.66); orthorhombic space group, P2₁2₁2₁; a=12.1292(13) Å, b=12.2378(13) Å, c=16.3811(18) Å at 173(2) K, V=2431.5(5) Å³; Z=4. An irregular green crystal (0.30 x 0.26 x 0.22 mm) was mounted on a Bruker Smart APEX CCD diffractometer equipped with a normal focus, 2.4 kW sealed tube X-ray source (Molybdenum radiation, λ=0.71073Å) operating at 50kV and 30 mA. Data were collected over a hemisphere by a combination of three sets. The cell parameters were determined and refined by least-squares fit of all collected reflections. Each frame exposure time was 10s covering 0.3° in ω (2 ≤ 2θ≤60°, 25438 reflections; 5895 unique (merging R factor 0.0987)). The first 100 frames were collected at the end of the data collection to monitor crystal decay. Absorption correction was performed with SADABS program. (This is based on the method of Blessing: Blessing, R. H. *Acta Crystallogr., Sect. A* **1995,** *51,* 33). The structure was solved by Patterson and Fourier methods and refined by full Matrix least-square using the Bruker SHELXTL program package (Bruker Analytical X-ray Systems, Madison, Wisconsin) minimizing ω(Fₒ²-F_{c}²)². (The molecule crystallizes with a dichroromethane solvent molecule). Weighted R factors (R_{w}) and goodness of fit (S) are based on F², conventional R factors are based on F The non-hydrogen carbon atoms were anisotropically refined. The hydrogen atoms were observed or calculated and refined riding to bonded carbon atoms. Final *R*_{*1*} [F²> 2σ(F²)]= 0.0508, *wR*_{*2*} [all data]= 0.1160 and *S*^{c}[all data]=0.951.

| **Selected Bond Lengths (Å) and Angles (deg) for complex 1** | | | |
|---|---|---|---|
| Cr-N(1) | 2.087(3) | Cr-Cl(1) | 2.2841(11) |
| Cr-N(2) | 2.036(3) | Cr-Cl(2) | 2.3013(10) |
| Cr-N(3) | 2.093(3) | Cr-Cl(3) | 2.3053(11) |
| N(1)-Cr-N(2) | 76.41(11) | N(2)-Cr-Cl(1) | 179.01(9) |
| N(1)-Cr-N(3) | 153.21(12) | N(2)-Cr-Cl(2) | 87.95(8) |
| N(2)-Cr-N(3) | 76.79(12) | N(2)-Cr-Cl(3) | 87.87(8) |
| N(1)-Cr-Cl(1) | 102.92(8) | N(3)-Cr-Cl(1) | 103.87(10) |
| N(1)-Cr-Cl(2) | 91.03(8) | N(3)-Cr-Cl(2) | 88.03(9) |
| N(1)-Cr-Cl(3) | 86.04(8) | N(3)-Cr-Cl(3) | 92.96(9) |
| Cl(1)-Cr-Cl(2) | 91.34(4) | Cl(1)-Cr-Cl(3) | 92.82(5) |
| Cl(2)-Cr-Cl(3) | 175.36(5) | | |

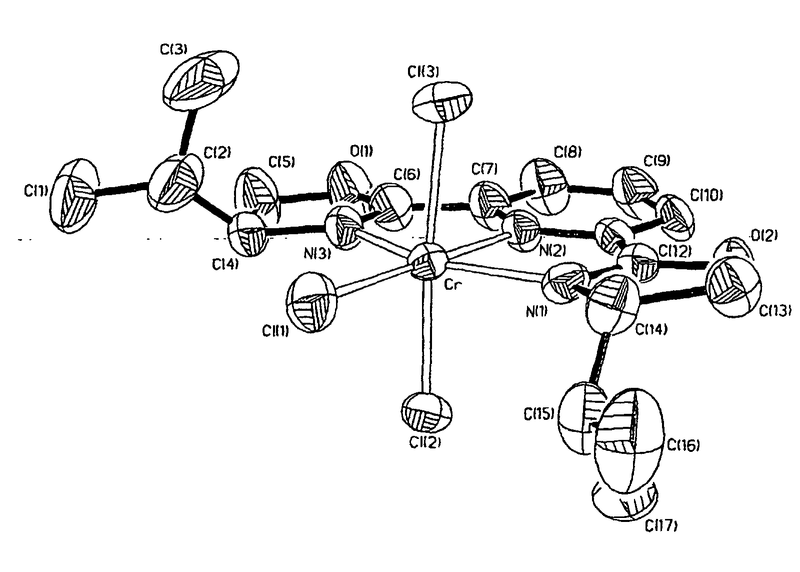

### Complex 2.[2,b-bis{1-[2,6-(diisopropylphenyl)imino]ethyl}pyridine]CrCl₃.

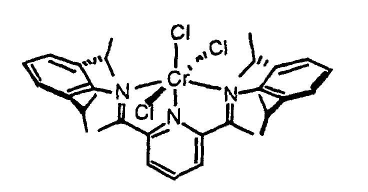

A solution of CrCl₃(THF)₃ (500 mg, 1.33 mmol) and 2,6-bis{1-[2,6-(diisopropylphenyl)imino]ethyl}pyridine (643 mg, 1.33 mmol) in acetone (15 mL) was refluxed for 12 hours, resulting a green solution. The reaction volume was concentrated, and pentane was added to afford a green solid, which was separated and washed repeatedly with pentane. This solid was recrystallised from CH₂Cl₂/ diethyl ether. Yield: 769 mg (90 %). Anal. Calcd. for C₃₃H₄₃Cl₃CrN₃: C, 61.92; H, 6.77; N, 6.56. Found: C, 61.96; H, 6.82; N, 5.97. IR (Nujol, cm⁻¹): 1579, 1274, 1215, 937, 802, 778, 399, 371. MS (FAB⁺): *m*/*z* 603 (M⁺ - Cl), 568 (M⁺ - 2 CI).

The cyclic voltammogram of a dichloromethane solution of this complex does not show any reduction process (between 1.6 V and -1.6 V).

The structure of Complex 2 was further elucidated by X-Ray diffraction: C₃₃H₄₃Cl₃CrN₃ 0.75CH₂Cl₂ (Mw=703.75); monoclinic space group, P2₁/c; a=14.0857(8) Å, b=16.4910(8) Å, c=16.6779(9) Å, β=95.9470(10)° at 293(2) K, V=3853.2(4) Å³; Z=4. An irregular green crystal (0.28 x 0.20 x 0.08 mm) was mounted on a Bruker Smart APEX CCD diffractometer equipped with a normal focus, 2.4 kW sealed tube X-ray source (Molybdenum radiation, λ=0.71073Å) operating at 50kV and 40 mA. Data were collected over a hemisphere by a combination of three sets. The cell parameters were determined and refined by least-squares fit of all collected reflections. Each frame exposure time was 10s covering 0.3° in ω (2≤ *2*θ≤ 50°, 29261 reflections, 6776 unique (merging R factor 0.1474)). The first 100 frames were collected at the end of the data collection to monitor crystal decay. Absorption correction was performed with SADABS program. (This is based on the method of Blessing: Blessing, R. H. *Acta Crystallogr., Sect. A* **1995,** *51,* 33). The structure was solved by Patterson and Fourier methods and refined by full Matrix least-square using the Bruker SHELXTL program package (Bruker Analytical X-ray Systems, Madison, Wisconsin) minimizing ω(Fₒ²-F_{c}²)². (The molecule crystallizes with 0.75 dichroromethane solvent molecules). Weighted R factors (R_{w}) and goodness of fit (S) are based on F², conventional R factors are based on F. The non-hydrogen carbon atoms were anisotropically refined. The hydrogen atoms were observed or calculated and refined riding to bonded carbon atoms. Final *R*_{*1*} [F²> *2*σ(F²)]= 0.0755, *wR*_{*2*} [all data]= 0.2054 and *S*^{*c*}[all data]=0.876.

| **Selected Bond Lengths (Å) and Angles (deg) for complex 2** | | | |
|---|---|---|---|
| Cr-N(1) | 1.995(5) | Cr-Cl(1) | 2.3130(19) |
| Cr-N(2) | 2.162(5) | Cr-Cl(2) | 2.2875(18) |
| Cr-N(3) | 2.179(5) | Cr-Cl(3) | 2.2806(19) |
| N(1)-Cr-N(2) | 77.0(2) | N(2)-Cr-Cl(1) | 91.89(14) |
| N(1)-Cr-N(3) | 77.2(2) | N(2)-Cr-Cl(2) | 90.44(14) |
| N(2)-Cr-N(3) | 154.0(2) | N(2)-Cr-Cl(3) | 99.18(16) |
| N(1)-Cr-Cl(1) | 83.67(15) | N(3)-Cr-Cl(1) | 88.68(14) |
| N(1)-Cr-Cl(2) | 89.23(15) | N(3)-Cr-Cl(2) | 85.81(13) |
| N(1)-Cr-Cl(3) | 174.67(15) | N(3)-Cr-Cl(3) | 106.77(15) |
| Cl(1)-Cr-Cl(2) | 171.83(8) | Cl(1)-Cr-Cl(3) | 92.84(7) |
| Cl(2)-Cr-Cl(3) | 94.53(7) | | |

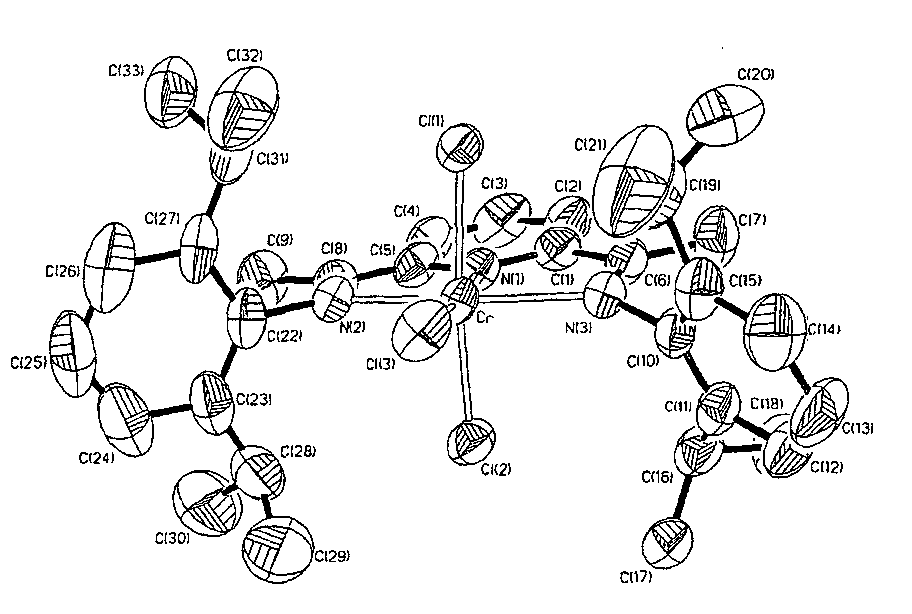

### Complex 3. [2,6-bis{1-(2-(tert-butylphenyl)imino]ethyl} pyridine]CrCl₃.

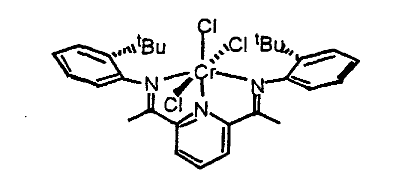

A solution of CrCl₃(THF)₃ (500 mg, 1.33 mmol) and 2,6-bis{1-[2-(*tert*-butylphenyl)imino]ethyl} pyridine (568 mg, 1.33 mmol) in acetone (10 mL) was refluxed overnight. The resulting green solution was evaporated to ca. 0.5 mL and diethyl ether was added to afford a green solid that was separated and washed repeatedly with diethyl ether (4 x 5 mL) and dried in vacuo. Yield: 584 mg (75 %). Anal. Calcd. for C₂₉H₃₅Cl₃CrN₃: C, 59.65; H, 6.04; N, 7.20. Found: C, 59.36; H, 6.42; N, 7.35. IR (Nujol, cm⁻¹): 1578, 1286, 1088, 1043, 817, 760, 399, 352. MS (FAB⁺): *m*/*z* 547 (M⁺ - Cl), 512 (M⁺ - 2 CI).

### Complex 4. [2,6-bis{1-[2,4,6-(trimethylphenyl)imino]ethyl}pyridine]CrCl₃.

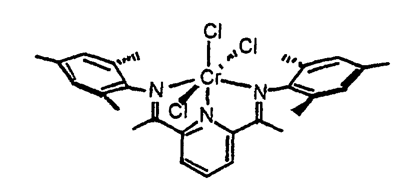

A solution of CrCl₃(THF)₃ (500 mg, 1.33 mmol) and 2,6-bis{1-[2,4,6-(trimethylphenyl)imino]ethyl}pyridine (530 mg, 1.33 mmol) in acetone (15 mL) was refluxed overnight, resulting a green suspension. The reaction volume was concentrated and the green solid formed was separated and washed repeatedly with acetone (4 x 5 mL). Yield: 482 mg (65 %). Anal. Calc. for C₂₇H₃₁N₃CrCl₃: C, 58.34; H, 5.62; N, 7.56. Found: C, 58.24; H, 5.68; N, 7.17. IR (Nujol, cm-1): 1577, 1269, 1224, 1210, 1100, 1042, 862, 855, 809, 402, 350. MS (FAB⁺): *m*/*z* 519 (M⁺ - Cl), 484 (M⁺ - 2 Cl).

### Complex 5. [2,6-bis{1-[2,6-(dimethylphenyl)imino]ethyl}pyridine]CrCl₃.

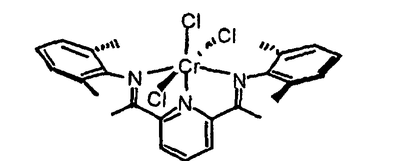

A solution of CrCl₃(THF)₃ (500 mg, 1.33 mmol) 2,6-bis{1-[2,6-(dimethylphenyl)imino]ethyl}pyridine (493 mg, 1.33 mmol) in acetone (15 mL) was refluxed for 5 hours, resulting a green suspension. The reaction volume was concentrated, and the green solid formed was separated and washed repeatedly with acetone (4 x 5 mL). Yield: 521 mg (74 %). Anal. Calc. for C₂₅H₂₇N₃CrCl₃: C, 56.89; H, 5.16; N, 7.96. Found: C, 56.55; H, 5.46; N, 7.61. IR (Nujol, cm-1): 1575, 1271, 1220, 1106, 1067, 1043, 817, 785, 766, 406, 356. MS (FAB⁺): *mlz* 491 (M⁺ - Cl), 456 (M⁺ - 2 Cl).

### Complex 6. [2,6-bis{1-[2,6-(diethylphenyl)imino]ethyl}pyridine]CrCl₃.

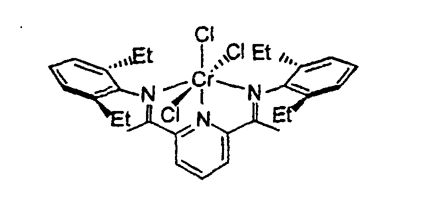

### Preparation of the ligand, 2,6-bis 1-{(2,6-diethylphenyl)imino]ethyl}pyridine

2,6-diethylaniline (1.5 mL, 9.2 mmol) was added to a solution of 2,6-diacetylpyridine (500 mg, 3 mmol) in absolute ethanol (12 mL). After the addition of several drops of glacial acetic acid, the solution was refluxed for 48 hours. Upon cooling at room temperature, the product crystallized from ethanol. The yellow solid formed was washed (3 x 5 mL) with cold ethanol and it was dried in vacuo at 60 °C for one day. Yield: 540 mg (48 %). ¹H NMR (CDCl₃, 300 MHz): δ 8.47 (d, 2H, *J*_{H-H} = 7.8 Hz, py-H_{*m*}), 7.91 (t, 1H, *J*_{H-H} = 7.8 Hz, py-H_{*p*}), 7.12-7.00 (m, 6H, Ph), 2.37 (m, 8H, -C*H*₂CH₃), 2.23 (s, 6H, N=C*Me*), 1.13 (m, 8H, -CH₂C*H*₃). ¹³C{¹H} NMR (CDCl₃, 75.4 MHz): δ 167.1 (N=C), 155.3 (py, Cₒ), 147.9 (Ar-Cᵢₚ), 137.0 (py, Cₚ), 131.3 (Ar-Co), 126.0 (Ar-Cm), 123.4 (Ar-Cp), 122.3 (py, Cₘ), 24.5 (*C*H₂CH₃), 16.7 (N=C-*Me*), 13.6 (CH₂*C*H₃).

### Preparation of the complex

A solution of CrCl₃(THF)₃ (500 mg, 1.33 mmol) and [2,6-bis{1-[2,6-(diethylphenyl)imino]ethyl}pyridine (568 mg, 1.33 mmol) in acetone (15 mL) was refluxed for 6 hours, resulting a green suspension. The reaction volume was concentrated, and diethyl ether was added to afford a green solid, which was separated and washed repeatedly with diethyl ether and dried in vacuo. Yield: 756 mg (97 %). Anal. Calc. for C₂₉H₃₅N₃CrCl₃: C, 59.65; H, 6.04; N, 7.19. Found: C, 59.32; H, 6.43; N, 7.38. IR (Nujol, cm⁻¹): 1579, 1263, 1043, 817, 399, 353. MS (FAB⁺): *m*/*z* 547 (M⁺ - Cl).

### Complex 7. [2,6-bis{1-[(2-methyl-6-isopropylphenyl)imino]ethyl}pyridine]CrCl₃.

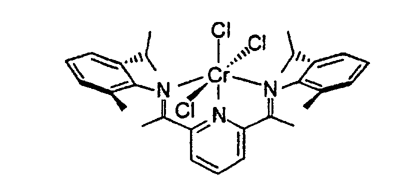

### Preparation of the ligand, 2,6-bis{1-[(2-methyl-6-isopropylphenyl)imino]ethyl}pyridine

2-methyl-6-isopropylaniline (1.45 mL, 9.2 mmol) was added to a solution of 2,6-diacetylpyridine (500 mg, 3 mmol) in absolute ethanol (12 mL). After the addition of several drops of glacial acetic acid, the solution was refluxed for 48 hours. Upon cooling at room temperature, the product crystallized from ethanol. The pale yellow solid formed was washed with cold ethanol (2 x 6 mL) and it was dried in vacuo at 60 °C for two days. Yield: 1.02 g (78 %). ¹H NMR (CDCl₃, 300 MHz): δ 8.46 (d, 2H, *J*_{H-H} = 7.9 Hz, py-H_{*m*}), 7.90 (t, 1H, *J*_{H-H} = 7.9 Hz, py-H_{*p*}), 7.17-6.98 (m, 6H, Ph), 2.81 (spt, 2H, *J*_{H-H} = 6.8 Hz, CH(CH₃)₂), 2.24 (s, 6H, N=C*Me*), 2.02 (s, 6H, Me), 1.18 (d, 6H, *J*_{H-H} = 6.8 Hz, CH(C*H*₃)₂), 1.12 (d, 6H, *J*_{H-H} = 6.8 Hz, CH(C*H*₃)₂). ¹³C{¹H} NMR (CDCl₃, 75.4 MHz, plus APT): δ 167.3 (N=C), 155.3 (py, Cₒ), 147.7 (Ar, Cᵢₚ), 136.9 (py, Cₚ), 136.4 (Ar, Cₒ), 127.8 (Ar, Cₚ), 125.1 (Ar, Cₒ), 123.4 (Ar, Cₘ), 123.2 (Ar, Cₘ), 122.3 (py, Cₘ), 28.2 (CH(CH₃)₂), 23.0 (CH(CH₃)₂), 22.7 (CH(CH₃)₂), 18.0 (N=C-*Me*), 16.7 *(Me).*

### Preparation of the complex

A solution of CrCl₃(THF)₃ (500 mg, 1.33 mmol) and 2,6-bis{1-[(2-methyl-6-isopropylphenyl)imino]ethyl}pyridine (568 mg, 1.33 mmol) in acetone (15 mL) was heated at 56 °C overnight, resulting a green suspension. The reaction volume was concentrated, and diethyl ether was added to afford a green solid, which was separated and washed repeatedly with diethyl ether (5 x 10 mL) and dried in vacuo. Yield: 670 mg (94 %). Anal. Calc. for C₂₉H₃₅N₃CrCl₃·1.5H₂O: C, 57.01; H, 6.27; N, 6.88. Found: C, 56.75; H, 6.41; N, 6.75. IR (Nujol, cm⁻¹): 1579, 1515, 1273, 1219. 357. MS (FAB⁺): *m*/*z* 547 (M⁺ - Cl).

### Complex 8. [2,6-bis{1-[2-(trifluoromethylphenyl)imino]ethyl}pyridine]CrCl₃.

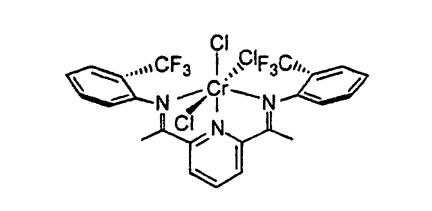

### Preparation of the ligand, 2,6-bis {1-[(2-trifluoromethylphenyl) imino]ethyl}pyridine

2-trifluoromethylaniline (1.15 mL, 9.2 mmol) was added to a solution of 2,6-diacetylpyridine (500 mg, 3 mmol) in absolute ethanol (12 mL). After the addition of several drops of glacial acetic acid, the solution was refluxed for 48 hours. Upon cooling at room temperature, the reaction volume was reduced to afford a pale yellow solid, that was washed with ethanol at 0 °C, and dried at vacuo. Yield: 668 mg (48.5%). ¹H NMR (CDCl₃, 300 MHz): δ 8.35 (d, 2H, *J*_{H-H} = 7.8 Hz, py-H_{*m*}), 7.90 (t, 1H, *J*_{H-H} = 7.8 Hz, py-H_{*p*}), 7.67 (d, 2H, *J*_{H-H} = 7.8 Hz, Ph), 7.51 (d, 2H, *J*_{H-H} = 7.7 Hz, Ph), 7.17 (d, 2H, *J*_{H-H} = 7.7 Hz, Ph), 6.79 (d, 2H, *J*_{H-H} = 7.8 Hz, Ph), 2.35 (s, 6H, N=C*Me*). ¹⁹F NMR (CDCl₃, 279 MHz): δ -64.3 (-CF₃). ¹³C{¹H} NMR (CDCl₃, 75.4 MHz): δ 168.7 (N=C), 155.0 (py, Cₒ), 149.7 (Ar, Cᵢₚ), 137.3 (py, Cₚ), 132.7 (Ar), 126.5 (q, *J*_{F-C} = 5 Hz, Ar), 124 (q, *J*_{F-C} = 273 Hz, CF₃), 123.3 (Ar), 123.1 (py, Cₘ), 119.8 (Ar), 16.7 (N=C-*Me*).

### Preparation of the complex

A solution of CrCl₃(THF)₃ (500 mg, 1.33 mmol) and 2,6-bis{1-[2-(trifluoromethylphenyl)imino]ethyl}pyridine (600 mg, 1.33 mmol) in dichloromethane (20 mL) was stirred at room temperature for 5 hours. During this time a green solution was obtained, that was filtered through Celite. The reaction volume was concentrated, and diethyl ether was added to afford a green solid, which was separated and washed repeatedly with diethyl ether. Yield: 446 mg (52 %). Anal. Calc. for C₂₃H₁₇F₆N₃CrCl₃·2H₂O: C, 42.91; H, 3.29; N, 6.53. Found: C, 43.07; H, 3.07; N, 6.26. IR (Nujol, cm⁻¹): 1604, 1584, 1318, 1175, 1121, 1060, 1038, 767, 363. MS (FAB⁺): *m*/*z* 571 (M⁺ - Cl).

### Complex 9. [2,6-bis{1-(cyclohexylimino)ethyl}pyridine]CrCl₃.

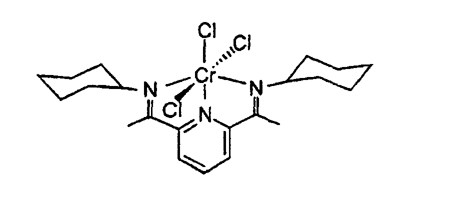

### Preparation of the ligand, 2,6-bis{1-(cyclohexylimino)ethyl}pyridine

Cyclohexylamine (1.4 mL, 12 mmol) was added to a solution of 2,6-diacetylpyridine (500 mg, 3 mmol) in absolute ethanol (10 mL). After the addition of several drops of glacial acetic acid the solution was refluxed for 48 hours. Upon cooling at room temperature, the product crystallized from ethanol. The pale yellow solid formed was washed with cold ethanol (4 x 4 mL). Yield: 421.2 mg (42%). MS (EI): *m*/*z* 325.5 (M⁺). ¹H NMR (CDCl₃, 300 MHz): δ 8.04 (d, 2H, *J*_{H-H} = 7.8 Hz, py-H_{*m*}), 7.66 (t, 1H, *J*_{H-H} = 7.8 Hz, py-H_{*p*}), 3.55 (m, 2H, -CH, Cy), 2.39 (s, 6H, N=C*Me*), 1.84-1.24 (m, 20H, -CH₂-, Cy). ¹³C{¹H} NMR (CDCl₃, 75.4 MHz, plus APT): δ 164.4 (N=C), 156.9 (py, Cₒ), 136.8 (py, Cₚ), 121.3 (py, Cₘ), 60.3 (N-CH), 33.5 (-CH₂-), 25.8 (-CH₂-), 24.9 (-CH₂-), 13.5 (N=C-*Me*).

### Preparation of the complex

A solution of CrCl₃(THF)₃ (500 mg, 1.33 mmol) and 2,6-bis{1-(cyclohexylimino)ethyl}pyridine (435 mg, 1.33 mmol) in dichloromethane (20 mL) was refluxed for 12 hours, resulting a green solution that was filtered through Celite. The reaction volume was concentrated, and diethyl ether was added to afford a green solid, which was separated and washed repeatedly with diethyl ether. Yield: 549 mg (82 %). Anal. Calc. for C₂₁H₃₁N₃CrCl₃·1.5H₂O: C, 49.37; H, 6.71; N, 8.22. Found: C, 49.24; H, 6.83; N, 7.96. IR (Nujol, cm⁻¹): 1579, 1282, 1200, 891, 805, 350, 290. MS (FAB⁺): *m*/*z* 447 (M⁺ - Cl).

### Comparative Complex 1. [2,6-bis{1-[2,6-(diisopropylphenyl)imino]ethyl} pyridine]CrCl₂.

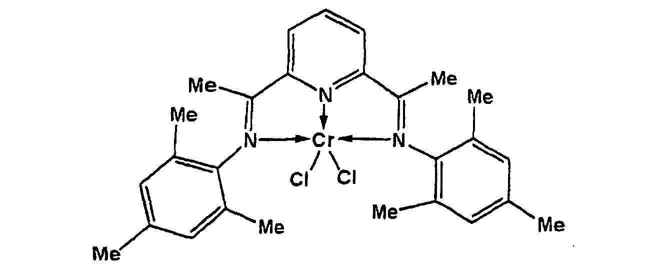

This complex was prepared according to the procedure described in WO 00/66923. The complex was isolated as a purple solid that became immediately green upon exposure to air. The same behavior was observed in solution.

The cyclic voltammogram of a dichloromethane solution of this compound shows a single oxidation at around -0.6 V, and the process is electrochemically irreversible.

### Polymerisation Examples

### General Procedures:

### Polymerisation at a pressure of 4 bar:

An autoclave glass reactor vessel of 1,3 L was employed for the polymerisation experiments. The reactor was charged with 600 mL of heptane, degassed and saturated with ethylene to a pressure of 4 bar at the set temperature. Polymerisations were effected at a constant pressure, being the consumption of ethylene monitored by means of a Tylan Mass Flowmeter Model FM 380. Temperature was measured by means of a PT-100 probe immersed in the reaction solvent. Regulation of the temperature was provided by a combination of heating and cooling systems operating simultaneously by passing two fluids through two external jackets at the walls of the reactor vessel. The heating was effected with oil from a circulating oil-bath (Haake N3). Refrigeration was obtained from cold tap-water controlled by an electrovalve connected to a Toho TM-104 controller. Ethylene (SEO, N35) was further purified by passing it through activated molecular sieve (13 X, 4Å) and activated alumina beds.

Methylaluminoxane (MAO, 10 % in toluene), triisobutylaluminium (TIBA, 1 M in heptane), tetraisobutylaluminoxane (TIBAO, 20% in heptane) and isobutylaluminoxane (IBAO, 15% in heptane) were purchased from Witco.
B(C₆F₅)₃ (3% in Isopar) was purchased from Fluka.
¹³C NMR Polymer analyses were effected in 1,2,4-trichlorobencene at 378 K, being the assignments of the signals made according to Randall, Rev. Macromol. Chem. Phys., 1989, C29, 201-317. End groups with Iso configuration were assigned according to the following chemical shifts:

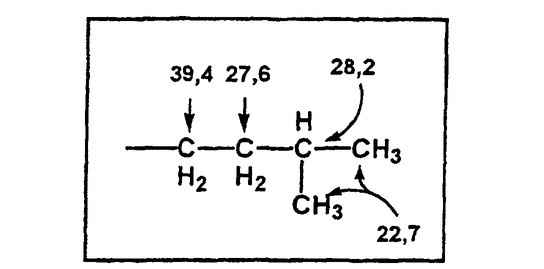

Molecular weight determinations of the polymers by Gel Permeation Chromatography and thermal analysis by Differential Scanning Calorimetry were performed at the Gidem in the Consejo Superior de Investigaciones Cientificas in Madrid.

### Abbreviations employed:

MAO - Methylaluminoxane
TEA - Triethylaluminium
TIBA - Triisobutylaluminium
TIBAO - Tetraisobutylaluminoxane
IBAO - Isobutylaluminoxane
NMR - Nuclear Magnetic Resonance
GPC - Gel Permeation Chromatography
DSC - Differential Scanning Calorimetry

### Example 1

### Polymerisation of ethylene with Complex 2

The temperature was set at 70°C. TIBA in heptane (1,0 M) was then added (3,0 mL) to the vessel before 2,3 mL (0,014 mmol) of a solution of Complex 2 in MAO/toluene was added too. Ethylene was continuously supplied in order to keep a constant pressure. The consumption of ethylene was maintained for 30 min. Afterwards, the polymerisation mixture was added to a methanol/HCl solution. Filtration, washing and drying of the resulting solid (70°C/10 mm Hg for ca. 20 h) gave 33,6 g of a white powder (Linear polyethylene according to the ¹³CNMR spectrum with 1,41 vinyl groups, 0,74 Iso end groups and 3,72 end methyl groups per 1000 C; GPC: Mw = 18.200, Mw/Mn = 2,51). The filtrates were decanted and the upper layer was evaporated under vacuum resulting in 0,28 g of a white waxy material. (Total Activity = 1,18 E+06 g PE/(mol Cr·bar·h)).

### Example 2

### Polymerisation of ethylene with Complex 2

The temperature was set at 70°C. TIBAO in heptane (20%) was then added (5,6 mL) to the vessel before 1,1 mL (0,0069 mmol) of a solution of Complex 2 in MAO/toluene was added too. Ethylene was continuously supplied in order to keep a constant pressure. The consumption of ethylene was maintained for 30 min. Afterwards, the polymerisation mixture was added to a methanol/HCl solution. Filtration, washing and drying of the resulting solid (70°C/10 mm Hg for ca. 20 h) gave 16,26 g of a white powder (Linear polyethylene according to the ¹³CNMR spectrum with 0,94 vinyl groups, 0,40 Iso end groups and 2,26 end methyl groups per 1000 C; GPC: Mw = 18.100, Mw/Mn = 1,95). The filtrates were decanted and the upper layer was evaporated under vacuum resulting in 0,13 g of a white waxy material. (Total Activity = 1,18 E+06 g PE/(mol Cr·bar·h)).

### Example 3

### Polymerisation of ethylene with Complex 2

The temperature was set at 70°C. IBAO in heptane (15%) was then added (0,9 mL) to the vessel before 1,1 mL (0,0069 mmol) of a solution of Complex 2 in MAO/toluene was added too. Ethylene was continuously supplied in order to keep a constant pressure. The consumption of ethylene was maintained for 30 min. Afterwards, the polymerisation mixture was added to a methanol/HCl solution. Filtration, washing and drying of the resulting solid (70°C/10 mm Hg for ca. 20 h) gave 15,65 g of a white powder. The filtrates were decanted and the upper layer was evaporated under vacuum resulting in 0,12 g of a white waxy material. (Total Activity = 1,15 E+06 g PE/(mol Cr·bar·h)).

### Example 4

### Polymerisation of ethylene with Complex 2

The temperature was set at 70°C. TIBAO in heptane (20%) was then added (1,5 mL) to the vessel before 0,6 mL (0,0075 mmol) of a solution of Complex 2 in MAO/toluene was added too. Ethylene was continuously supplied in order to keep a constant pressure. The consumption of ethylene was maintained for 30 min. Afterwards, the polymerisation mixture was added to a methanol/HCl solution. Filtration, washing and drying of the resulting solid (70°C/10 mm Hg for ca. 20 h) gave 15,74 g of a white powder (Linear polyethylene according to the ¹³CNMR spectrum with 1,03 vinyl groups and 1,53 end methyl groups per 1000 C; GPC: Mw = 32.200, Mw/Mn = 1,29). The filtrates were decanted and the upper layer was evaporated under vacuum resulting in 0,04 g of a white waxy material. (Total Activity = 1,05 E+06 g PE/(mol Cr·bar·h)).

### Example 5

### Polymerisation of ethylene with Complex 4

The temperature was set at 45°C. MAO in toluene was then added (1,0 mL) to the vessel before 0,5 mL (0,0054 mmol) of a solution of Complex 4 in MAO/toluene was added too. Ethylene was continuously supplied in order to keep a constant pressure. The consumption of ethylene was maintained for 45 min. During this period the temperature raised up to 70°C, uncontrolled by the refrigeration system. After this period the polymerisation mixture was added to a methanol/HCl solution. Filtration, washing and drying of the resulting solid (70°C/10 mm Hg for ca. 20 h) gave 142,44 g of a white powder (Linear polyethylene according to the ¹³CNMR spectrum with 19,44 vinyl groups and 20,14 end methyl groups per 1000 C). The filtrates were decanted and the upper layer was evaporated under vacuum resulting in 8,4 g of a white waxy material (Linear polyethylene according to the ¹³CNMR spectrum with 41,56 vinyl groups and 41,72 end methyl groups per 1000 C). (Total Activity = 9,32 E+06 g PE/(mol Cr·bar·h)).

### Example 6

### Polymerisation of ethylene with Complex 4

The temperature was set at 70°C. MAO in toluene was then added (1,0 mL) to the vessel before 0,2 mL (0,0075 mmol) of a solution of Complex 4 in MAO/toluene was added too. Ethylene was continuously supplied in order to keep a constant pressure. The consumption of ethylene was maintained for ca. 4 min. During this period the temperature raised up to 75°C, uncontrolled by the refrigeration system. Afterwards, the polymerisation mixture was added to a methanol/HCl solution. Filtration, washing and drying of the resulting solid (70°C/10 mm Hg for ca. 20 h) gave 17,65 g (Activity = 4,14 E+07 g PE/(mol Cr·bar·h)) of a white powder (Linear polyethylene according to the ¹³CNMR spectrum with 11,56 vinyl groups and 12,71 end methyl groups per 1000 C). GPC: Mw = 2.100, Mw/Mn = 1,31. DSC: Tmax = 114 °C, ΔHm = -242 J/g.

### Example 7

### Co-polymerisation of ethylene and 1-hexene with Complex 4

The temperature was set at 70°C. To this, 15 mL of 1-hexene was also added. MAO in toluene was then added (0,8 mL) to the vessel before 0,1 mL (0,0009 mmol) of a solution of Complex 4 in MAO/toluene was added too. Ethylene was continuously supplied in order to keep a constant pressure. The consumption of ethylene was maintained for ca. 30 min. During this period the temperature reached a maximum of 74°C for a couple of minutes, being controlled by the refrigeration system at ca. 70°C most of the time. Afterwards, the polymerisation mixture was added to a methanol/HCl solution. Filtration, washing and drying of the resulting solid (70°C/10 mm Hg for ca. 20 h) gave 34,84 g (Activity = 1,83 E+07 g PE/(mol Cr·bar·h)) of a white powder. (Branched polyethylene according to the ¹³CNMR spectrum with 1,13 Bu branches, 12,57 vinyl groups and 13,24 end methyl groups per 1000 C). GPC: Mw = 2.290, Mw/Mn = 1,59. DSC: Tmax = 105 °C, ΔHm = -246 J/g.

### Example 8

### Polymerisation of ethylene with Complex 4

The temperature was set at 90°C. MAO in toluene was then added (0,8 mL) to the vessel before 0,1 mL (0,0009 mmol) of a solution of Complex 4 in MAO/toluene was added too. Ethylene was continuously supplied in order to keep a constant pressure. The consumption of ethylene was maintained for ca. 10 min. Afterwards, the polymerisation mixture was added to a methanol/HCl solution. Filtration, washing and drying of the resulting solid (70°C/10 mm Hg for ca. 20 h) gave 5,85 g (Activity = 9,20 E+06 g PE/(mol Cr·bar·h)) of a white powder. (Linear polyethylene according to the ¹³CNMR spectrum with 10,16 vinyl groups and 10,46 end methyl groups per 1000 C). GPC: Mw = 2.660, Mw/Mn = 1,48. DSC: Tmax = 120 °C, ΔHm = -252 J/g.

### Example 9

### Polymerisation of ethylene with Complex 4

The temperature was set at 70°C. Triisobutylalumium in heptane (1,0 M) was then added (1,0 mL) to the vessel before 0,1 mL (0.0009 mmol) of a solution of Complex 4 in MAO/toluene was added too. Ethylene was continuously supplied in order to keep a constant pressure. The consumption of ethylene was maintained for ca. 30 min. During this period the temperature raised up to 74°C for a couple of minutes being controlled by the refrigeration system at ca. 70°C most of the time. Afterwards, the polymerisation mixture was added to a methanol/HCl solution. Filtration, washing and drying of the resulting solid (70°C/10 mm Hg for ca. 20 h) gave 29,03 g of a white powder (Activity = 1,52 E+07 g PE/(mol Cr·bar·h)). (Linear polyethylene according to the ¹³CNMR spectrum with 11,85 vinyl groups and 12,97 end methyl groups per 1000 C). GPC: Mw = 1.630, Mw/Mn = 1,48.

### Example 10

### Polymerisation of ethylene with Complex 4

The temperature was set at 70°C. MAO in toluene was then added (1,0 mL) to the vessel before 0,1 mL (0,0009 mmol) of a solution of Complex 4 in TIBA in heptane (1,0 M) was added too. Ethylene was continuously supplied in order to keep a constant pressure. The consumption of ethylene was maintained for ca. 5,5 min. Afterwards, the polymerisation mixture was added to a methanol/HCl solution. Filtration, washing and drying of the resulting solid (70°C/10 mm Hg for ca. 20 h) gave 2,34 g (Activity = 6,96 E+06 g PE/(mol Cr·bar·h)) of a white powder. (Linear polyethylene according to the ¹³CNMR spectrum with 6,17 vinyl groups and 10,14 end methyl groups per 1000 C). GPC: Mw = 3.080, Mw/Mn = 1,18.

### Example 11

### Polymerisation of ethylene with Complex 4

The temperature was set at 45°C. Triethylaluminium in toluene (1,0 M) was then added (1,0 mL) to the vessel before 0,3 mL (0,0027 mmol Cr) of a solution of Complex 4 and B(C₆F₅)₃ (Cr/B ca. 1,05) in triethylaluminium in toluene (1,0 M) was added too. Ethylene was continuously supplied in order to keep a constant pressure. The consumption of ethylene was maintained for ca. 90 min. Afterwards, the polymerisation mixture was added to a methanol/HCl solution. Filtration, washing and drying of the resulting solid (70°C/10 mm Hg for ca. 20 h) gave 1,71 g (Activity = 1,06 E+05 g PE/(mol Cr·bar·h)) of a white powder and fibrils.

### Example 12

### Preparation of supported Complex 4 by pre-polymerisation

In a schlenk tube, 0,5 g of silica-MAO TA02794/HL/PQ provided by Witco, 10 mL of dry toluene and 25 mg of Complex 4 were mixed together under nitrogen. To this mixture, 5,0 mL of MAO/Toluene 10% were also added. The schlenk tube was then immersed in an ice bath and the contents stirred with a Teflon magnetic bar at 800 rpm. Ethylene was passed through the schlenk at atmospheric pressure for 4,15 h. The ice bath was then removed, the solvent evaporated in vacuo and the solid dried. The total weight of solids was 2,06 g. From ICP measurements the content of Cr is 12,0% by weight and Al 14,6% by weight.

### Example 13

### Polymerisation of ethylene using pre-polymerised catalyst

In a stainless-steel 2 L autoclave heated to reach an internal temperature of 80 °C charged with 1 L isobutane and 0,9 mL of TIBA 1,0 M, ethylene was added up to a total internal pressure of ca. 35 bar. To this, 100 mg of the pre-polymerised catalyst prepared in Example 12 were added by dragging it with an ethylene current and the internal pressure in the reactor increased up to ca. 38 bar. Polymerisation started immediately and the ethylene was added continuously in order to keep a constant internal pressure. The consumption of the ethylene was very stable all through the 60 min of duration of the essay. Afterwards the reactor was vented and cooled down to room temperature. The solids were discharged and washed thoroughly with acidified methanol. After drying in vacuo for 20 h the weight of polymer amounted to 150,3 g (Activity = 3,09 E+06 g PE/(mol Cr·bar·h)). (Linear polyethylene according to the ¹³CNMR spectrum with 17,7 vinyl groups and 16,7 end methyl groups per 1000 C). GPC: Mw = 1.470, Mw/Mn = 2,13.

### Example 14

### Polymerisation of ethylene with Complex 5

The temperature was set at 70°C. MAO in toluene was then added (0,8 mL) to the vessel before 0,2 mL (0,0019 mmol) of a solution of Complex 5 in MAO/toluene was added too. Ethylene was continuously supplied in order to keep a constant pressure. The consumption of ethylene was maintained for ca. 30 min. Afterwards, the polymerisation mixture was added to a methanol/HCl solution. Filtration, washing and drying of the resulting solid (70°C/10 mm Hg for ca. 20 h) gave 38,84 g of a white powder (Linear polyethylene according to the ¹³CNMR spectrum with 13,54 vinyl groups and 14,65 end methyl groups per 1000 C; GPC: Mw = 2.130, Mw/Mn = 1,54; DSC: Tmax = 106 °C, ΔHm = -242 J/g).

The filtrates were decanted and the upper layer was evaporated under vacuum resulting in 7,05 g of a white waxy material (Linear according to the ¹³CNMR spectrum with 44,67 vinyl groups and 42,52 end methyl groups per 1000 C). (Total Activity = 1,21 E+07 g PE/(mol Cr·bar·h)).

### Example 15

### Co-polymerisation of ethylene and 1-hexene with Complex 5

The temperature was set at 70°C. To this, 15 mL of 1-hexene was also added. MAO in toluene was then added (0,8 mL) to the vessel before 0,2 mL (0,0019 mmol) of a solution of Complex 5 in MAO/toluene was added too. Ethylene was continuously supplied in order to keep a constant pressure. The consumption of ethylene was maintained for ca. 30 min.

Afterwards, the polymerisation mixture was added to a methanol/HCl solution. Filtration, washing and drying of the resulting solid (70°C/10 mm Hg for ca. 20 h) gave 31,25 g of a white powder (Moderately branched polyethylene according to the ¹³CNMR spectrum with 0,87 Butyl branches , 13,92 vinyl groups and 13,83 end methyl groups per 1000 C; DSC: Tmax = 115 °C, ΔHm = -251 J/g). The filtrates were decanted and the upper layer was evaporated under vacuum resulting in 9,21 g of a white waxy material (Moderately branched according to the ¹³CNMR spectrum with 1,35 Butyl branches , 42,59 vinyl groups and 41,08 end methyl groups per 1000 C. (Total Activity = 1,04 E+07 g PE/(mol Cr·bar·h)).

### Example 16

### Polymerisation of ethylene with Complex 5

The temperature was set at 60°C. MAO in toluene was then added (0,8 mL) to the vessel before 0,2 mL (0,0019 mmol) of a solution of Complex 5 in MAO/toluene was added too. Ethylene was continuously supplied in order to keep a constant pressure. The consumption of ethylene was maintained for ca. 45 min. Afterwards, the polymerisation mixture was added to a methanol/HCl solution. Filtration, washing and drying of the resulting solid (70°C/10 mm Hg for ca. 20 h) gave 14,66 g of a white powder (¹³CNMR: 0,22 Butyl groups, 12,98 vinyl groups and 14,22 end methyl groups per 1000 C; GPC: 1.620, Mw/Mn = 1,54). The filtrates were decanted and the upper layer was evaporated under vacuum resulting in 5,46 g of a white waxy material (¹³CNMR: 43,25 vinyl groups and 42,82 end methyl groups per 1000 C). (Total Activity = 3,5 E+06 g PE/(mol Cr·bar·h)).

### Example 17

### Polymerisation of ethylene with Complex 6

The temperature was set at 70°C. MAO in toluene was then added (1,7 mL) to the vessel before 0,8 mL (0,0046 mmol) of a solution of Complex 6 in MAO/toluene was added too. Ethylene was continuously supplied in order to keep a constant pressure. The consumption of ethylene was maintained for 30 min. Afterwards, the polymerisation mixture was added to a methanol/HCl solution. Filtration, washing and drying of the resulting solid (70°C/10 mm Hg for ca. 20 h) gave 18,44 g of a white powder (Linear polyethylene according to the ¹³CNMR spectrum with 6,58 vinyl groups and 10,50 end methyl groups per 1000 C). The filtrates were decanted and the upper layer was evaporated under vacuum resulting in 2,85 g of a white waxy material. (Total Activity = 2,52 E+06 g PE/(mol Cr·bar·h)).

### Example 18

### Polymerisation of ethylene with Complex 6

The temperature was set at 70°C. TIBA in heptane (1,0 M) was then added (2,0 mL) to the vessel before 0,8 mL (0,0046 mmol) of a solution of Complex 6 in MAO/toluene was added too. Ethylene was continuously supplied in order to keep a constant pressure. The consumption of ethylene was maintained for 30 min. Afterwards, the polymerisation mixture was added to a methanol/HCl solution. Filtration, washing and drying of the resulting solid (70°C/10 mm Hg for ca. 20 h) gave 25,43 g of a white powder (Linear polyethylene according to the ¹³CNMR spectrum with 6,78 vinyl groups, 1,16 Iso end groups and 10,50 end methyl groups per 1000 C; GPC: Mw = 2.690, Mw/Mn = 2,09). The filtrates were decanted and the upper layer was evaporated under vacuum resulting in 3,27 g of a white waxy material. (Total Activity = 3,14 E+06 g PE/(mol Cr·bar·h)).

### Example 19

### Polymerisation of ethylene with Complex 6

The temperature was set at 80°C. TIBA in heptane (1,0 M) was then added (3,7 mL) to the vessel before 0,8 mL (0,0046 mmol) of a solution of Complex 6 in MAO/toluene was added too. Ethylene was continuously supplied in order to keep a constant pressure. The consumption of ethylene was maintained for 30 min. Afterwards, the polymerisation mixture was added to a methanol/HCl solution. Filtration, washing and drying of the resulting solid (70°C/10 mm Hg for ca. 20 h) gave 23,10 g of a white powder (Linear polyethylene according to the ¹³CNMR spectrum with 6,88 vinyl groups, 2,48 Iso end groups and 11,03 end methyl groups per 1000 C). The filtrates were decanted and the upper layer was evaporated under vacuum resulting in 3,18 g of a white waxy material. (Total Activity = 2,88 E+06 g PE/(mol Cr·bar·h)).

### Example 20

### Polymerisation of ethylene with Complex 6

The temperature was set at 90°C. TIBA in heptane (1,0 M) was then added (3,7 mL) to the vessel before 0,8 mL (0,0046 mmol) of a solution of Complex 6 in MAO/toluene was added too. Ethylene was continuously supplied in order to keep a constant pressure. The consumption of ethylene was maintained for 30 min. Afterwards, the polymerisation mixture was added to a rnethanol/HCl solution. Filtration, washing and drying of the resulting solid (70°C/10 mm Hg for ca. 20 h) gave 13,71 g of a white powder (Linear polyethylene according to the ¹³CNMR spectrum with 6,49 vinyl groups, 3,60 Iso end groups and 11,17 end methyl groups per 1000 C). The filtrates were decanted and the upper layer was evaporated under vacuum resulting in 2,05 g of a white waxy material. (Total Activity = 1,73 E+06 g PE/(mol Cr·bar·h)).

### Example 21

### Polymerisation of ethylene with Complex 6

The temperature was set at 70°C. Triethylaluminium in heptane (1,0 M) was then added (3,7 mL) to the vessel before 0,7 mL (0,0046 mmol) of a solution of Complex 6 in MAO/toluene was added too. Ethylene was continuously supplied in order to keep a constant pressure. The consumption of ethylene was maintained for 30 min. Afterwards, the polymerisation mixture was added to a methanol/HCl solution. Filtration, washing and drying of the resulting solid (70°C/10 mm Hg for ca. 20 h) gave 37,25 g of a white powder (Linear polyethylene according to the ¹³CNMR spectrum with 7,44 vinyl groups and 12,20 end methyl groups per 1000 C). The filtrates were decanted and the upper layer was evaporated under vacuum resulting in 3,31 g of a white waxy material. (Total Activity = 4,38 E+06 g PE/(mol Cr·bar·h)).

### Example 22

### Polymerisation of ethylene with Complex 6

The temperature was set at 70°C. TIBA in heptane (1,0 M) was then added (0,5 mL) to the vessel before 0,8 mL (0,0046 mmol) of a solution of Complex 6 in MAO/toluene was added too. Ethylene was continuously supplied in order to keep a constant pressure. The consumption of ethylene was maintained for 30 min. Afterwards, the polymerisation mixture was added to a methanol/HCl solution. Filtration, washing and drying of the resulting solid (70°C/10 mm Hg for ca. 20 h) gave 2,66 g of a white powder (Linear polyethylene according to the ¹³CNMR spectrum with 6,13 vinyl groups, 2,55 Iso end groups and 12,18 end methyl groups per 1000 C). The filtrates were decanted and the upper layer was evaporated under vacuum resulting in 0,65 g of a white waxy material. (Total Activity = 7,25 E+05 g PE/(mol Cr·bar·h)).

### Example 23

### Polymerisation of ethylene with Complex 7

The temperature was set at 70°C. TIBA in heptane (1,0 M) was then added (1,9 mL) to the vessel before 0,4 mL (0,0023 mmol) of a solution of Complex 7 in MAO/toluene was added too. Ethylene was continuously supplied in order to keep a constant pressure. The consumption of ethylene was maintained for 30 min. Afterwards, the polymerisation mixture was added to a methanol/HCl solution. Filtration, washing and drying of the resulting solid (70°C/10 mm Hg for ca. 20 h) gave 33,45 g of a white powder (Linear polyethylene according to the ¹³CNMR spectrum with 4,28 vinyl groups, 0,48 Iso end groups and 5,87 end methyl groups per 1000 C; GPC: Mw = 5.390, Mw/Mn = 2,17). The filtrates were decanted and the upper layer was evaporated under vacuum resulting in 1,53 g of a white waxy material. (Total Activity = 7,66 E+06 g PE/(mol Cr·bar·h)).

### Comparative Example

The following experiment was set forward in order to compare the difference in performance between a Cr(II) complex and a Cr(III) complex:

Two solutions were prepared, one with the Cr(III) Complex 4 and the other with Comparative Complex 1. Both compounds have the same structure of ligand but differ in the oxidation estate of the chromium. The solutions were prepared employing the same batch of MAO/Toluene under nitrogen and where allowed to stand with stirring at 500 rpm at room the temperature for exactly one hour before being injected to the polymerisation autoclave for the essay. The concentration of both solutions was the same, 0,003 mol/L, and the ratio Al_{MAO}/Cr for both was ca. 400. Both polymerisation essays were performed at 70°C, employing 0,15 mL of the catalyst solutions and 0,37 mL of TIBA/Heptane (1,0 M). The pressure of ethylene employed was 4,0 bar and the consumption of ethylene was maintained for 30 min for both essays after which the polymerisation mixtures were added to a methanol/HCl solution. Filtration, washing and drying of the resulting solids (70°C/10 mm Hg for ca. 20 h) gave 8,87 g of linear polyethylene for the complex of Cr[III] and 3,53 g of linear polyethylene for Cr[II]. The filtrates of both essays were decanted and the upper layers were evaporated under vacuum resulting in 2,53 g of a white waxy material. (Total Activity = 1,24 E+07 g PE/(mol Cr·bar·h)) for the essay with Complex 4 and 1,49 g of also a white waxy material. (Total Activity = 5,44 E+06 g PE/(mol Cr·bar·h)) for the essay performed with Comparative Complex 1. Thus, this experiment demonstrates that the Cr[III] complex is ca. twice as active as the Cr[II] complex under identical polymerisation conditions, being this a clear advantage. Further, the Cr[III] complex is perfectly stable under air atmosphere whilst Cr[II] must be stored and manipulated under nitrogen atmosphere.

## Claims

1. A chromium (III) tridentate complex of formula I 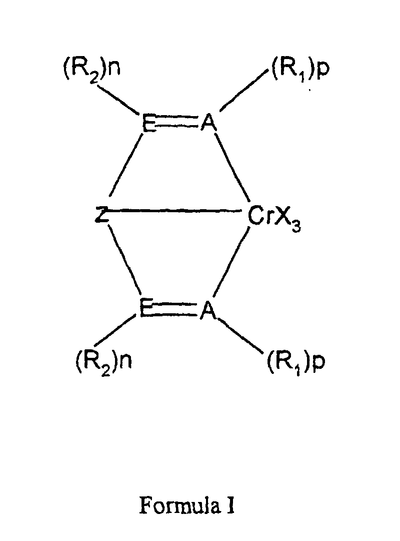 wherein:
Z is a group comprising at least a nitrogen, phosphorous, oxygen or sulfur atom which is able to coordinate to the chromium atom;
each R₁ is independently selected from the group consisting of H and a monovalent radical comprising from 1 to 30 carbon atoms and from 0 to 5 heteroatoms independently selected from Si, N, P, O, F, Cl and B atoms;
each R₂ is independently selected from the group consisting of H and a monovalent radical comprising from 1 to 30 carbon atoms and from 0 to 5 heteroatoms independently selected from Si, N, P, O, F, Cl and B atoms;
each R₂ can join together with either R₁ or Z forming one or more aromatic or aliphatic rings optionally containing heteroatoms;
each A is independently selected from nitrogen, phosphorous, As and Sb;
each E is independently selected from carbon, phosphorus and nitrogen;
each p is independently 1 or 2;
each n is independently 0, 1 or 2; and
each X is independently an atom or group covalently or ionically attached to the chromium atom.

2. Chromium complex according to claim 1, wherein Z is selected from the group consisting of: 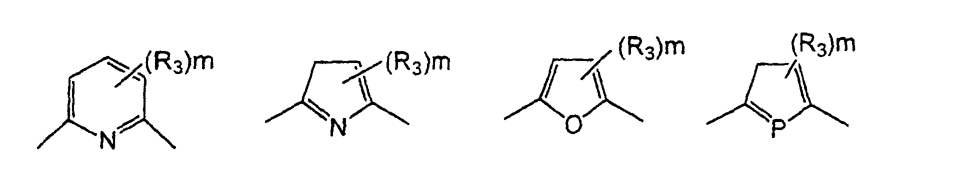 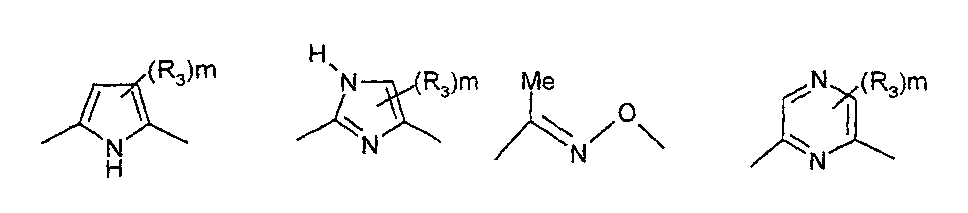 wherein each R₃ is independently selected from linear or branched C₁-C₂₀ alkyl, C₆-C₃₀ aryl, hydroxyl, amino, nitro, tri(linear or branched C₁-C₂₀ alkyl)silyl, linear or branched C₁-C₂₀ alkoxy, chlorine, bromine, fluorine and trifluoromethyl;
m is 0, 1, 2 or 3;
A is nitrogen; and
E is carbon.

3. Chromium complex according to anyone of claims 1 or 2, wherein each R₁ is independently s phenyl radical optionally substituted in the positions 2 and/or 6.

4. Chromium complexes according to anyone of claims 1 or 2, wherein each R₂ is independently selected from hydrogen, linear or branched C₁-C₂₀ alkyl, C₃-C₂₀ cycloalkyl, silyl, C₆-C₃₀ aryl, linear or branched C₂-C₂₀ alkenyl, optionally comprising 1 to 5 heteroatoms independently selected from Si, N, P, O, F, Cl and B atoms.

5. An olefin polymerisation catalyst comprising a chromium complex according to anyone of claims 1 to 4 and one or more activators.

6. Olefin polymerisation catalyst according to claim 5, further comprising an inorganic or organic support.

7. Olefin polymerisation catalysts according to anyone of claims 5 or 6, further comprising a Ziegler-Natta catalyst.

8. Olefin polymerisation catalyst according to anyone of claims 5 or 6, further comprising a metallocene catalyst.

9. A process for the (co)polymerisation of alpha olefins **characterized by** the use of a catalyst system according to anyone of claims 5 to 8.

10. Process according to claim 9, wherein the olefin used is ethylene optionally in combination with a C₃-C₈ alpha olefin.

## Patentansprüche

1. Dreizähniger Chrom (III)-Komplex der Formel I 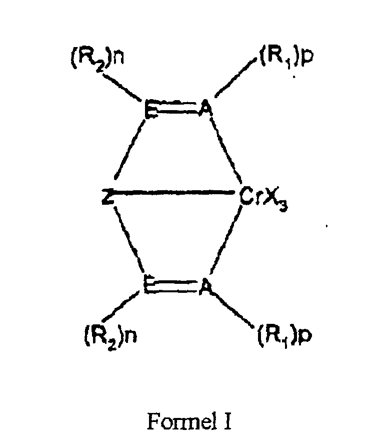 wobei:
Z eine zumindest ein Stickstoff-, Phosphor-, Sauerstoffoder Schwefelatom enthaltende Gruppe ist, die an das Chromatom koordinieren kann;
jedes R₁ unabhängig voneinander aus der Gruppe, die H und ein einwertiges Radikal mit 1 bis 30 Kohlenstoffatomen und 0 bis 5 unabhängig voneinander aus Si-, N-, P-, O-, F-, Cl- und B-Atomen ausgewählten Heteroatomen umfasst, ausgewählt ist;
jedes R₂ unabhängig voneinander aus der Gruppe, die H und ein einwertiges Radikal mit 1 bis 30 Kohlenstoffatomen und 0 bis 5 unabhängig voneinander aus Si-, N-, P-, O-, F-, Cl- und B-Atomen ausgewählten Heteroatomen umfasst, ausgewählt ist;
jedes R₂ mit R₁ oder Z binden kann, wobei ein oder mehrere aromatische oder aliphatische, gegebenenfalls Heteroatomen enthaltende, Ringe gebildet werden;
jedes A unabhängig voneinander aus Stickstoff, Phosphor, As und Sb ausgewählt ist;
jedes E unabhängig voneinander aus Kohlenstoff, Phosphor und Stickstoff ausgewählt ist;
jedes p unabhängig voneinander 1 oder 2 ist;
jedes n unabhängig voneinander 0, 1 oder 2 ist; und
jedes X unabhängig voneinander ein kovalent oder ionisch am Chromatom gebundenes Atom oder Gruppe ist.

2. Chrom-Komplex nach Anspruch 1, worin Z aus der Gruppe, die aus: 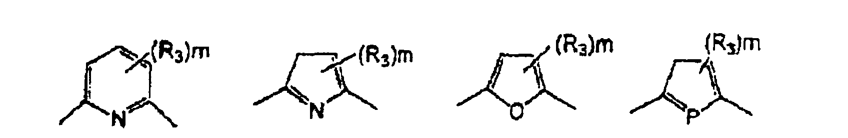 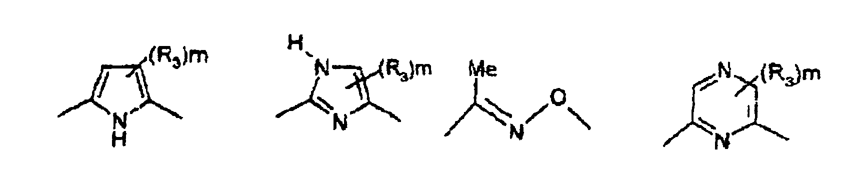 besteht, ausgewählt ist,
wobei jedes R₃ unabhängig voneinander aus linearem oder verzweigtem C₁-C₂₀-Alkyl, C₆-C₃₀-Aryl, Hydroxyl, Amino, Nitro, Tri(lineares oder verzweigtes C₁-C₂₀-Alkyl)Silyl, linearem oder verzweigtem C₁-C₂₀-Alkoxy, Chlor, Brom, Fluor und Trifluormethyl ausgewählt ist;
m 0, 1, 2 oder 3 ist;
A Stickstoff ist; und
E Kohlenstoff ist.

3. Chrom-Komplex nach einem der Ansprüche 1 oder 2, worin jedes R₁ unabhängig voneinander ein gegebenenfalls in Position 2 und/oder 6 substituiertes Phenylradikal ist.

4. Chrom-Komplex nach einem der Ansprüche 1 oder 2, worin jedes R₂ unabhängig voneinander aus Wasserstoff, linearem oder verzweigtem C₁-C₂₀-Alkyl, C₃-C₂₀-Cykloalkyl, Silyl, C₆-C₃₀-Aryl, linearem oder verzweigtem, gegebenenfalls 1 bis 5 unabhängig voneinander aus Si-, N-, P-, O-, F-, Cl- und B-Atomen ausgewählten Heteroatomen umfassendem C₂-C₂₀-Alkenyl, ausgewählt ist.

5. Olefinpolymerisationskatalysator, der einen Chrom-Komplex nach einem der Ansprüche 1 bis 4 und einen oder mehrere Aktivatoren umfasst.

6. Olefinpolymerisationskatalysator nach Anspruch 5, der außerdem einen anorganischen oder organischen Träger umfasst.

7. Olefinpolymerisationskatalysatoren nach einem der Ansprüche 5 oder 6, die außerdem einen Ziegler-Natta-Katalysator umfassen.

8. Olefinpolymerisationskatalysator nach einem der Ansprüche 5 oder 6, der außerdem einen Metallocenkatalysator umfasst.

9. Verfahren zur (Co)-Polymerisation von Alpha-Olefinen, **dadurch gekennzeichnet, dass** ein Katalysatorsystem nach einem der Ansprüche 5 bis 8 verwendet wird.

10. Verfahren nach Anspruch 9, bei welchem das verwendete Olefin Ethylen ist, gegebenenfalls in Kombination mit einem C₃-C₈-Alpha-Olefin.

## Revendications

1. Complexe de chrome (III) tridentelé de formule I 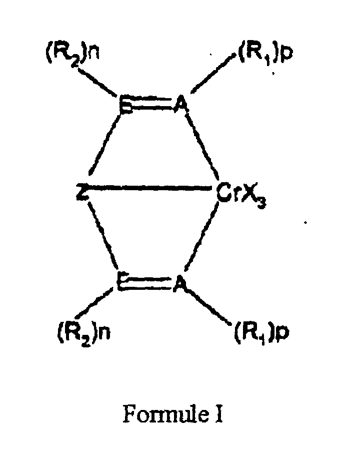 dans laquelle :
Z est un groupe comprenant au moins un atome de nitrogène, de phosphore, d'oxygène o de soufre qui est capable de coordonner l'atome de chrome ;
chaque R₁ est sélectionné indépendamment du groupe consistant en H et un radical monovalent comprenant de 1 à 30 atomes de carbone et de 0 à 5 hétéroatomes sélectionnés indépendamment d'atomes de Si, N, P, O, F, Cl et B ;
chaque R₂ est sélectionné indépendamment du groupe consistant en H et un radical monovalent comprenant de 1 à 30 atomes de carbone et de 0 à 5 hétéroatomes sélectionnés indépendamment d'atomes de Si, N, P, O, F, Cl et B ;
chaque R₂ peut s'attacher à R₁ ou à Z et former un ou plusieurs anneaux aromatiques ou aliphatiques, contenant optionnellement des hétéroatomes ;
chaque A est sélectionné indépendamment de nitrogène, phosphore, As et Sb ;
chaque E est sélectionné indépendamment de carbone, phosphore et nitrogène ;
chaque p est indépendamment 1 ou 2 ;
chaque n est indépendamment 0, 1 ou 2 ; et
chaque X est indépendamment un atome ou groupe attaché de façon covalente ou ionique à l'atome de chrome.

2. Complexe de chrome selon la revendication 1, dans lequel Z est sélectionné du groupe consistant en : 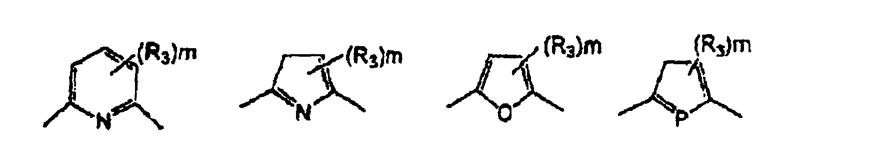 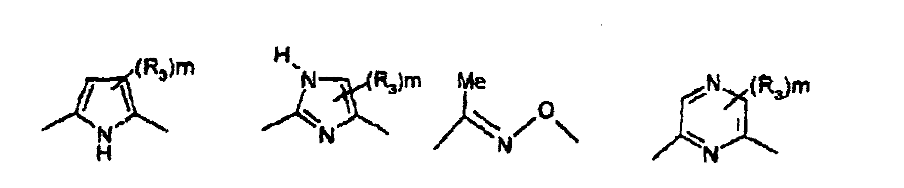 dans lequel chaque R₃ est sélectionné indépendamment d'alkyle en C₁-C₂₀ linéaire ou ramifié, aryle en C₆-C₃₀, hydroxyle, amino, nitro, tri(alkyle en C₁-C₂₀ linéaire ou ramifié)silyle, alkoxy en C₁-C₂₀ linéaire ou ramifié, chlore, brome, fluor et trifluorométhyle ;
m est 0, 1, 2 ou 3 ;
A est du nitrogène ; et
E est du carbone.

3. Complexe de chrome selon une quelconque des revendications 1 ou 2, dans lequel chaque R₁ est indépendamment un radical de phényle optionnellement substitué aux positions 2 et/ou 6.

4. Complexe de chrome selon une quelconque des revendications 1 ou 2, dans lequel chaque R₂ est sélectionné indépendamment d'hydrogène, alkyle en C₁-C₂₀ linéaire ou ramifié, cycloalkyle en C₃-C₂₀, silyle, aryle en C₆-C₃₀, alkényle en C₂-C₂₀ linéaire ou ramifié, comprenant optionnellement de 1 à 5 hétéroatomes sélectionnés indépendamment d'atomes de Si, N, P, O, F, Cl et B.

5. Catalyseur de polymérisation d'oléfines comprenant un complexe de chrome selon une quelconque des revendications 1 à 4 et un ou plusieurs activateurs.

6. Catalyseur de polymérisation d'oléfines selon la revendication 5, comprenant en outre un support inorganique ou organique.

7. Catalyseur de polymérisation d'oléfines selon une quelconque des revendications 5 ou 6, comprenant en outre un catalyseur Ziegler-Natta.

8. Catalyseur de polymérisation d'oléfines selon une quelconque des revendications 5 ou 6, comprenant en outre un catalyseur de métallocène.

9. Procédé pour la (co)polymérisation d'alpha-oléfines **caractérisé par** l'utilisation d'un système catalyseur selon une quelconque des revendications 5 à 8.

10. Procédé selon la revendication 9, dans lequel l'oléfine utilisée est de l'éthylène, optionnellement en combinaison avec une alpha-oléfine en C₃-C₈.
